# EUROPEAN PATENT APPLICATION

(11) **EP 4 756 245 A1**
(43) Date of publication of application: **10.06.2026**
(21) Application number: 24847267.2
(22) Date of filing: 26.07.2024
(51) Int. Cl.: F16C 33/62, C23C 8/22, F16C 19/06, F16C 33/64

(54) **SHAFT COMPONENT, METHOD FOR MANUFACTURING SHAFT COMPONENT, METHOD FOR MANUFACTURING BEARING RACEWAY COMPONENT, AND BEARING RACEWAY COMPONENT**

(30) Priority: 28.07.2023 WO PCT/JP2023/027685; 21.02.2024 WO PCT/JP2024/006361
(71) Applicant: JTEKT CORPORATION, Kariya-shi, Aichi 448-8652 (JP)
(72) Inventor: KANETANI, Kohei, Kariya-shi, Aichi 448-8652 (JP)
(74) Representative: Winter, Brandl - Partnerschaft mbB
(86) International application number: PCT/JP2024/026814
(87) International publication number: WO 2025/028441

(57) **Abstract**

A shaft component for manufacture of a bearing raceway component including a power transmission portion having teeth by carburizing or carbonitriding includes a columnar or cylindrical shaft member. The shaft member has a central axis. The shaft member includes a first portion on a first axial side, and a second portion on a second axial side of the first portion. The first portion is integrated with the second portion. The first portion is made of a first steel material as a raw material. The second portion is made of a second steel material as a raw material. The first portion includes a portion serving as a raceway. The second portion includes a portion serving as the teeth. An alloy composition of the first steel material is different from an alloy composition of the second steel material. A third portion includes a joining surface connected to the second portion on the second axial side of the first portion. A fourth portion includes a joining surface connected to the first portion on the first axial side of the second portion. A fifth portion is located in the first portion on the first axial side of the third portion. A sixth portion is located in the second portion on the second axial side of the fourth portion. A hardness of the third portion is greater than a hardness of the fifth portion. A hardness of the fourth portion is greater than a hardness of the sixth portion. The portion serving as the raceway is located in the fifth portion and is not located in the third portion.

## Description

### TECHNICAL FIELD

The present disclosure relates to a shaft component, a method for manufacturing a shaft component, a method for manufacturing a bearing raceway component, and a bearing raceway component. This application claims priority based on International Patent Application PCT/JP 2023/027685 filed on July 28, 2023, and International Patent Application PCT/JP 2024/006361 filed on February 21, 2024, and incorporates by reference all the contents of these international patent applications.

### BACKGROUND ART

There is known a bearing raceway component in which an inner ring of a bearing and a gear shaft are integrated. Patent Document 1 discloses a transmission that includes a first shaft unit connected to a drive shaft of a drive unit. The first shaft unit includes: a first shaft connected to the drive shaft and having a first shaft raceway surface on its outer circumferential surface; a first output gear that is provided on the first shaft and rotates together with the first shaft; a first outer ring attached to a first support portion that supports the first shaft, provided to surround the first shaft raceway surface, and having a first outer ring raceway surface on its inner circumferential surface; and a plurality of first rolling elements disposed between the first shaft raceway surface and the first outer ring raceway surface. The first shaft of this transmission has a raceway surface and an output gear on its outer circumferential surface.

### Related Art Documents

### Patent Documents

Patent Document 1: Japanese Unexamined Patent Application Publication No. 2023-020380 (JP 2023-020380 A)

### SUMMARY OF THE INVENTION

### Problem to be Solved by the Invention

When a single shaft member is provided with a raceway of a bearing portion having a raceway and teeth of a power transmission portion having teeth such as teeth of a gear or a toothed pulley, it has been difficult to simultaneously satisfy the strength required in the raceway of the bearing portion having the raceway and the strength required in the teeth of the power transmission portion having the teeth. In other words, when the single shaft member is provided with the raceway of the bearing portion having the raceway and the teeth of the power transmission portion having the teeth, it has been found that, when the shaft member is subjected to heat treatment to optimize either the strength required in the raceway of the bearing portion having the raceway or the strength required in the teeth of the power transmission portion having the teeth, the other of these strengths needs to be compromised. Therefore, there is a demand for a shaft member that can simultaneously satisfy the required strength of the raceway of the bearing portion having the raceway and the required strength of the teeth of the power transmission portion having the teeth.

### Means for Solving the Problem

A shaft component according to the present disclosure is a shaft component for manufacture of a bearing raceway component including a power transmission portion having teeth by carburizing or carbonitriding. The shaft component includes a columnar or cylindrical shaft member. The shaft member has a central axis. The shaft member includes a first portion on a first axial side, and a second portion on a second axial side of the first portion. The first portion is integrated with the second portion. The first portion is made of a first steel material as a raw material. The second portion is made of a second steel material as a raw material. The first portion includes a portion serving as a raceway. The second portion includes a portion serving as the teeth. An alloy composition of the first steel material is different from an alloy composition of the second steel material. A third portion includes a joining surface connected to the second portion on the second axial side of the first portion. A fourth portion includes a joining surface connected to the first portion on the first axial side of the second portion. A fifth portion is located in the first portion on the first axial side of the third portion. A sixth portion is located in the second portion on the second axial side of the fourth portion. A hardness of the third portion is greater than a hardness of the fifth portion. A hardness of the fourth portion is greater than a hardness of the sixth portion. The portion serving as the raceway is located in the fifth portion and is not located in the third portion.

One method for manufacturing a shaft component according to the present disclosure is a method for manufacturing the shaft component for manufacture of a bearing raceway component according to the present disclosure. The method includes: performing friction welding on a workpiece for the first portion in a first state and a workpiece for the second portion in the first state to obtain an integrated first workpiece; and first performing one of formation of a portion serving as a bearing portion having the raceway by first machining in the first portion of the first workpiece and formation of a portion serving as the power transmission portion having the teeth by second machining in the second portion of the first workpiece, and then performing the other.

Another method for manufacturing a shaft component according to the present disclosure is a method for manufacturing the shaft component for manufacture of a bearing raceway component according to the present disclosure. The method includes: first performing one of formation of a portion serving as a bearing portion having the raceway by first machining in a workpiece for the first portion in a first state and formation of a portion serving as the power transmission portion having the teeth by second machining in a workpiece for the second portion in the first state, and then performing the other to obtain the workpiece for the first portion in a second state and the workpiece for the second portion in the second state; and integrating, by friction welding, the workpiece for the first portion in the second state and the workpiece for the second portion in the second state.

A method for manufacturing a bearing raceway component according to the present disclosure is a method for manufacturing a bearing raceway component including a power transmission portion having teeth. The method includes the method for manufacturing the shaft component according to the present disclosure. The shaft component obtained by the method for manufacturing the shaft component according to the present disclosure is defined as a second workpiece. The method includes: performing carburizing or carbonitriding, then quenching, and then tempering simultaneously on the portion serving as the bearing portion having the raceway and the portion serving as the power transmission portion having the teeth in the second workpiece; and forming an integrated carburized layer or an integrated carbonitrided layer over an outer circumferential surface of a portion of the fifth portion on the second axial side, an outer circumferential surface of the third portion, an outer circumferential surface of the fourth portion, and an outer circumferential surface of a portion of the sixth portion on the first axial side, and/or forming an integrated carburized layer or an integrated carbonitrided layer over an inner circumferential surface of the portion of the fifth portion on the second axial side, an inner circumferential surface of the third portion, an inner circumferential surface of the fourth portion, and an inner circumferential surface of the portion of the sixth portion on the first axial side.

A bearing raceway component according to the present disclosure is a bearing raceway component including a power transmission portion having teeth. The bearing raceway component is made of a columnar or cylindrical shaft member. The bearing raceway component has a central axis. The bearing raceway component includes a seventh portion on a first axial side, and an eighth portion on a second axial side of the seventh portion. The seventh portion is integrated with the eighth portion. The seventh portion is made of a first steel material as a raw material. The eighth portion is made of a second steel material as a raw material. An alloy composition of the first steel material is different from an alloy composition of the second steel material. The seventh portion includes a raceway. The eighth portion includes the teeth. A carburized layer or a carbonitrided layer is provided integrally over surfaces of the seventh portion and the eighth portion. The seventh portion includes a joining surface connected to the eighth portion on the second axial side of the seventh portion. An entirety of the raceway is located in the seventh portion. An entirety of the teeth is located in the eighth portion. The entirety of the raceway is located at a position axially spaced from the joining surface by 5 mm or more.

### Effects of the Invention

According to the invention of the present disclosure, it is possible to provide the single bearing raceway component including the power transmission portion having the teeth, which has both the strength suitable for the raceway in the bearing portion having the raceway and the strength suitable for the teeth in the power transmission portion having the teeth, and has good durability. It is also possible to provide the shaft component for manufacture of the bearing raceway component.

### BRIEF DESCRIPTION OF THE DRAWINGS

[FIG. 1] FIG. 1 is a schematic sectional view of a bearing raceway component according to a first embodiment.
[FIG. 2] FIG. 2 is a schematic sectional view of a shaft component according to the first embodiment.
[FIG. 3] FIG. 3 is a schematic sectional view of a bearing device including the bearing raceway component in FIG. 2.
[FIG. 4] FIG. 4 is a partially enlarged view of FIG. 1.
[FIG. 5] FIG. 5 is a graph showing a Vickers hardness of the shaft component according to the first embodiment.
[FIG. 6] FIG. 6 is a graph showing a Vickers hardness of the bearing raceway component according to the first embodiment.
[FIG. 7] FIG. 7 is a graph showing the Vickers hardness of the bearing raceway component according to the first embodiment.
[FIG. 8] FIG. 8 is a graph showing the Vickers hardness of the bearing raceway component according to the first embodiment.
[FIG. 9] FIG. 9 is a diagram showing heat treatment conditions for obtaining the bearing raceway component with the Vickers hardnesses shown in FIGS. 6 to 8.
[FIG. 10] FIG. 10 is a diagram illustrating a first manufacturing method for the bearing raceway component.
[FIG. 11] FIG. 11 is a diagram illustrating a second manufacturing method for the bearing raceway component.
[FIG. 12] FIG. 12 is a schematic sectional view of a bearing raceway component according to a second embodiment.
[FIG. 13] FIG. 13 is a schematic sectional view of a bearing raceway component according to a second embodiment.

### MODES FOR CARRYING OUT THE INVENTION

### <Outline of Embodiments of Invention of Present Disclosure>

An outline of embodiments of the invention of the present disclosure will be listed below.
(1) A shaft component according to the present disclosure is a shaft component for manufacture of a bearing raceway component including a power transmission portion having teeth by carburizing or carbonitriding. The shaft component includes a columnar or cylindrical shaft member. The shaft member has a central axis. The shaft member includes a first portion on a first axial side, and a second portion on a second axial side of the first portion. The first portion is integrated with the second portion. The first portion is made of a first steel material as a raw material. The second portion is made of a second steel material as a raw material. The first portion includes a portion serving as a raceway. The second portion includes a portion serving as the teeth. An alloy composition of the first steel material is different from an alloy composition of the second steel material. A third portion includes a joining surface connected to the second portion on the second axial side of the first portion. A fourth portion includes a joining surface connected to the first portion on the first axial side of the second portion. A fifth portion is located in the first portion on the first axial side of the third portion. A sixth portion is located in the second portion on the second axial side of the fourth portion. A hardness of the third portion is greater than a hardness of the fifth portion. A hardness of the fourth portion is greater than a hardness of the sixth portion. The portion serving as the raceway is located in the fifth portion and is not located in the third portion.

The above shaft component is the shaft component for manufacture of the bearing raceway component including the power transmission portion having the teeth. This shaft component includes the first portion and the second portion that are integrated together. The first portion includes the portion serving as the raceway. The second portion includes the portion serving as the teeth. The first portion and the second portion are joined by, for example, friction welding. Therefore, the third portion including the joining surface in the first portion has a greater Vickers hardness than that before the friction welding. The fifth portion spaced from the joining surface in the first portion has no change in Vickers hardness compared to that before the friction welding. The same is true for the fourth portion and the sixth portion included in the second portion. The fourth portion including the joining surface in the second portion has a greater Vickers hardness than that before the friction welding. The sixth portion spaced from the joining surface in the second portion has no change in Vickers hardness compared to that before the friction welding. In this way, the shaft component includes the portions hardened by joining through the friction welding at the joining surfaces and in the vicinity thereof. The residual stress and the metal structure of the portion hardened by joining through the friction welding may be different from the residual stress and the metal structure of the other portion (portion with no change in hardness). Therefore, in the bearing raceway component manufactured using the shaft component, if the raceway is provided at the portion hardened by joining, the durability of the raceway will decrease because the structure may be altered or unevenly deformed due to a change in residual stress caused by use over time. The shaft component includes the portion serving as the raceway in the fifth portion that is not hardened by joining and is less susceptible to the peculiar structure or uneven deformation, thereby avoiding the problem of the decrease in durability of the raceway. The shaft component may be manufactured through the procedure of forming the portion serving as the raceway in the first portion and then joining the first portion and the second portion by the friction welding. Then, the shaft component is carburized or carbonitrided to have a surface hardened layer formed on its surface and to harden the inside as well, thereby manufacturing the bearing raceway component. When the carburizing or carbonitriding is performed, the deformation dimension of the third portion may be different from the deformation dimension of the fifth portion. Due to this difference in deformation dimension, deformation may occur in the portion serving as the raceway. Providing the portion serving as the raceway over the third portion and the fifth portion is uneconomical because it requires additional post-processing.

(2) In the shaft component according to (1), it is preferable that the portion serving as the teeth be located in the sixth portion and not located in the fourth portion.

As described above, the shaft component includes the portion hardened by joining through the friction welding (the fourth portion including the joining surface in the second portion) at the joining surface and in the vicinity thereof. If the teeth are provided at the portion hardened by joining, the durability of the teeth will decrease because the structure may be altered or unevenly deformed due to a change in residual stress caused by use over time. The shaft component includes the portion serving as the teeth in the sixth portion that is not hardened by joining and is less susceptible to the peculiar structure or uneven deformation, thereby avoiding the problem of the decrease in durability of the teeth. The shaft component may be manufactured through the procedure of forming the portion serving as the teeth in the second portion and then joining the first portion and the second portion by the friction welding. In this case, when the shaft component is carburized or carbonitrided, the deformation dimension of the fourth portion may be different from the deformation dimension of the sixth portion. Due to this difference in deformation dimension, deformation may occur in the portion serving as the teeth. Providing the portion serving as the teeth over the fourth portion and the sixth portion is uneconomical because it requires additional post-processing.

(3) In the shaft component according to (1) or (2), it is preferable that the portion serving as the raceway be a portion serving as a raceway groove along which balls roll.
The raceway groove has an arc shape in a cross section including the central axis, and the shape of a grinding wheel for forming the raceway groove is an arc shape in a cross section in conformity with the shape of the raceway groove after grinding. Therefore, if the portion serving as the raceway groove is deformed by carburizing or carbonitriding, the grinding allowance will vary depending on the axial position of the raceway groove during subsequent grinding, and grinding burns and deterioration in shape accuracy are likely to occur due to a change in machining load. Thus, when the portion serving as the raceway in the fifth portion of the shaft component is the portion serving as the raceway groove along which balls roll, the above problem can be solved.

(4) In the shaft component according to any one of (1) to (3), it is preferable that the portion serving as the raceway be a portion serving as a conical or cylindrical raceway along which rollers roll, and the shaft component further include a portion serving as a rib axially adjacent to the portion serving as the raceway.
The shaft component includes the portion serving as the conical or cylindrical raceway, and the portion serving as the rib axially adjacent to the portion serving as the raceway. In this case, the shape of a grinding wheel for forming the portion serving as the raceway and the portion serving as the rib is a shape conforming to the shapes of the raceway and the rib. Therefore, if the portion serving as the raceway and the portion serving as the rib are deformed by carburizing or carbonitriding, the grinding allowance will vary depending on the axial position of the raceway during subsequent grinding, and grinding burns and deterioration in shape accuracy are likely to occur due to a change in machining load. Thus, when the portion serving as the conical or cylindrical raceway in the fifth portion of the shaft component is the portion along which rollers roll, the above problem can be solved by the raceway. In the shaft component, it is preferable that the portion serving as the rib be also provided in the fifth portion in the first portion.

(5) In the shaft component according to any one of (1) to (4), it is preferable that the portion serving as the teeth be a portion serving as gear teeth, spline teeth, or teeth of a toothed pulley.

(6) In the shaft component according to any one of (1) to (5), it is preferable that the shaft component include a columnar or cylindrical shaft member, a central axis of the first portion coincide with a central axis of the second portion, and an outer circumferential surface of a portion of the fifth portion on the second axial side, an outer circumferential surface of the third portion, an outer circumferential surface of the fourth portion, and an outer circumferential surface of a portion of the sixth portion on the first axial side define a single cylindrical surface.

If a corner (recessed corner) is present in a case where the dimensional changes of the fifth portion, the third portion, the fourth portion, and the sixth portion are not uniform after the carburizing or carbonitriding, tensile stress is likely to occur at the corner. In the above case, there are no corners at the boundaries of the outer circumferential surfaces of the fifth portion, the third portion, the fourth portion, and the sixth portion of the shaft component. Therefore, damage to the shaft component is suppressed.

(7) In the shaft component according to any one of (1) to (5), it is preferable that the shaft component include a cylindrical shaft member, a central axis of the first portion coincide with a central axis of the second portion, and an inner circumferential surface of a portion of the fifth portion on the second axial side, an inner circumferential surface of the third portion, an inner circumferential surface of the fourth portion, and an inner circumferential surface of a portion of the sixth portion on the first axial side define a single cylindrical surface.

If a corner (recessed corner) is present in a case where the dimensional changes of the fifth portion, the third portion, the fourth portion, and the sixth portion are not uniform after the carburizing or carbonitriding, tensile stress is likely to occur at the corner. In the above case, there are no corners at the boundaries of the inner circumferential surfaces of the fifth portion, the third portion, the fourth portion, and the sixth portion of the shaft component. Therefore, damage to the shaft component is suppressed.
(8) In the shaft component according to any one of (1) to (7), it is preferable that a first combination of the first steel material and the second steel material be a combination in which the first steel material contains at least one of manganese, nickel, chromium, and molybdenum as an alloy component, the second steel material contains at least one of manganese, nickel, chromium, and molybdenum as an alloy component, and a total content (mass%) of the manganese, the nickel, the chromium, and the molybdenum of the first steel material is more than 1.5 times as large as a total content (mass%) of the manganese, the nickel, the chromium, and the molybdenum of the second steel material, a second combination of the first steel material and the second steel material be a combination in which the first steel material contains silicon as an alloy component, the second steel material contains silicon as an alloy component, and a content (mass%) of the silicon of the first steel material is less than a content (mass%) of the silicon of the second steel material, a third combination of the first steel material and the second steel material be a combination in which the first steel material does not contain chromium as an alloy component or contains the chromium in an amount of 1.6 mass% or less, and does not contain niobium as the alloy component or contains the niobium in an amount of 0.01 mass% or less, and the second steel material contains, as alloy components, chromium in an amount of 1.0 mass% or more and 2.5 mass% or less, and niobium in an amount of 0.02 mass% or more and 0.10 mass% or less, a fourth combination of the first steel material and the second steel material be a combination in which the first steel material contains nitrogen as an alloy component in an amount of 0.001 mass% or more and 0.050 mass% or less, does not contain boron as the alloy component or contains the boron in an amount of 0.001 mass% or less, and does not contain titanium as the alloy component or contains the titanium in an amount of 0.003 mass% or less, and the second steel material contains, as alloy components, nitrogen in an amount of 0.001 mass% or more and 0.050 mass% or less, boron in an amount of 0.001 mass% or more and 0.005 mass% or less, and titanium in an amount of 0.01 mass% or more and 0.08 mass% or less, and a combination of the first steel material and the second steel material satisfy at least one of the first combination, the second combination, the third combination, and the fourth combination.
(9) In the shaft component according to any one of (1) to (8), it is preferable that the first steel material contain carbon as an alloy component, the second steel material contain carbon as an alloy component, and a content (mass%) of the carbon of the first steel material be more than a content (mass%) of the carbon of the second steel material.

The combinations of the first steel material and the second steel material according to (8) and (9) are suitable for obtaining the first portion having the strength suitable for the raceway in the bearing portion having the raceway and the second portion having the strength suitable for the teeth in the power transmission portion having the teeth.
(10) A method for manufacturing a shaft component according to the present disclosure is a method for manufacturing the shaft component according to any one of (1) to (9). The method includes: performing friction welding on a workpiece for the first portion in a first state and a workpiece for the second portion in the first state to obtain an integrated first workpiece; and first performing one of formation of a portion serving as a bearing portion having the raceway by first machining in the first portion of the first workpiece and formation of a portion serving as the power transmission portion having the teeth by second machining in the second portion of the first workpiece, and then performing the other.
(11) A method for manufacturing a shaft component according to the present disclosure is a method for manufacturing the shaft component according to any one of (1) to (9). The method includes: first performing one of formation of a portion serving as a bearing portion having the raceway by first machining in a workpiece for the first portion in a first state and formation of a portion serving as the power transmission portion having the teeth by second machining in a workpiece for the second portion in the first state, and then performing the other to obtain the workpiece for the first portion in a second state and the workpiece for the second portion in the second state; and integrating, by friction welding, the workpiece for the first portion in the second state and the workpiece for the second portion in the second state.

With the manufacturing method according to (10) and the manufacturing method according to (11), the shaft component according to the present disclosure can be manufactured.
(12) A method for manufacturing a bearing raceway component according to the present disclosure is a method for manufacturing a bearing raceway component including a power transmission portion having teeth. The method includes the manufacturing method according to (10) or (11). The shaft component obtained by the manufacturing method according to (10) or (11) is defined as a second workpiece. The method includes: performing carburizing or carbonitriding, then quenching, and then tempering simultaneously on the portion serving as the bearing portion having the raceway and the portion serving as the power transmission portion having the teeth in the second workpiece; and forming an integrated carburized layer or an integrated carbonitrided layer over an outer circumferential surface of a portion of the fifth portion on the second axial side, an outer circumferential surface of the third portion, an outer circumferential surface of the fourth portion, and an outer circumferential surface of a portion of the sixth portion on the first axial side, and/or forming an integrated carburized layer or an integrated carbonitrided layer over an inner circumferential surface of the portion of the fifth portion on the second axial side, an inner circumferential surface of the third portion, an inner circumferential surface of the fourth portion, and an inner circumferential surface of the portion of the sixth portion on the first axial side.
(13) In the method for manufacturing the bearing raceway component according to (12), it is preferable that the workpiece subjected to the tempering be defined as a third workpiece, and the method include first performing one of third machining on the portion serving as the bearing portion having the raceway in the third workpiece and fourth machining on the portion serving as the power transmission portion having the teeth in the third workpiece, and then performing the other.

With the manufacturing method according to (12) and the manufacturing method according to (13), the bearing raceway component can be manufactured.

(14) A bearing raceway component according to the present disclosure is a bearing raceway component including a power transmission portion having teeth. The bearing raceway component is made of a columnar or cylindrical shaft member. The bearing raceway component has a central axis. The bearing raceway component includes a seventh portion on a first axial side, and an eighth portion on a second axial side of the seventh portion. The seventh portion is integrated with the eighth portion. The seventh portion is made of a first steel material as a raw material. The eighth portion is made of a second steel material as a raw material. An alloy composition of the first steel material is different from an alloy composition of the second steel material. The seventh portion includes a raceway. The eighth portion includes the teeth. A carburized layer or a carbonitrided layer is provided integrally over surfaces of the seventh portion and the eighth portion. The seventh portion includes a joining surface connected to the eighth portion on the second axial side of the seventh portion. An entirety of the raceway is located in the seventh portion. An entirety of the teeth is located in the eighth portion. The entirety of the raceway is located at a position axially spaced from the joining surface by 5 mm or more.

The bearing raceway component includes the seventh portion including the raceway and the eighth portion including the power transmission portion having the teeth. The seventh portion and the eighth portion are made of different steel materials and integrated together. The carburized layer or the carbonitrided layer is provided integrally. Therefore, the bearing raceway component has both the strength suitable for the raceway in the bearing portion having the raceway and the strength suitable for the teeth in the power transmission portion having the teeth. In the bearing raceway component, the entirety of the raceway is located in the seventh portion, and the entirety of the raceway is located at the position axially spaced from the joining surface by 5 mm or more. This means that no raceway is provided in the portion hardened when the seventh portion and the eighth portion are integrated by friction welding. Therefore, the bearing raceway component has good durability.

(15) In the bearing raceway component according to (14), it is preferable that the eighth portion include a joining surface connected to the seventh portion on the first axial side of the eighth portion, and the entirety of the teeth be located at a position axially spaced from the joining surface by 5 mm or more.

In the bearing raceway component, the entirety of the teeth is located in the eighth portion, and the entirety of the teeth is located at the position axially spaced from the joining surface by 5 mm or more. This means that no teeth are provided in the portion hardened when the seventh portion and the eighth portion are integrated by friction welding. Therefore, the bearing raceway component has better durability.

### <Details of Embodiments of Invention of Present Disclosure>

The embodiments of the present disclosure will be described below. The embodiments of the invention in the present disclosure should be considered to be illustrative in all respects and not restrictive. The scope of the present invention is defined by the claims, and is intended to include all modifications within the meaning and scope of equivalents to the claims.

### [First Embodiment]

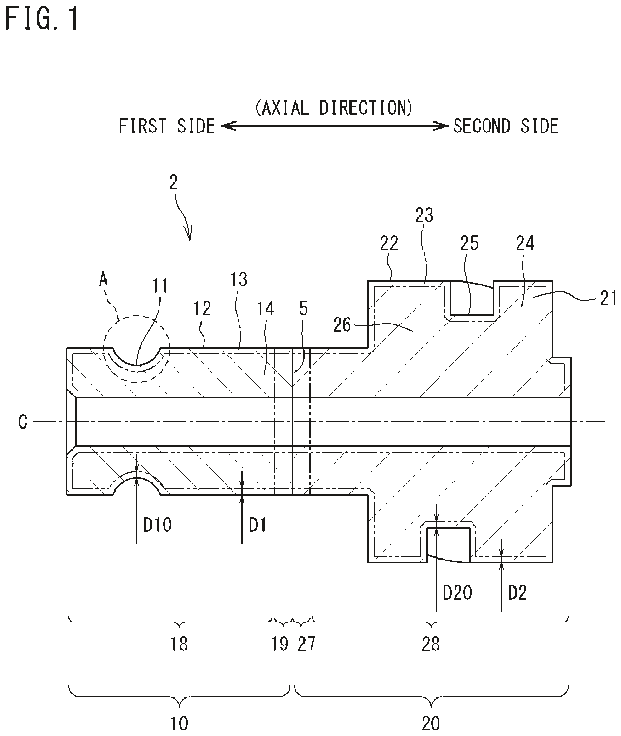

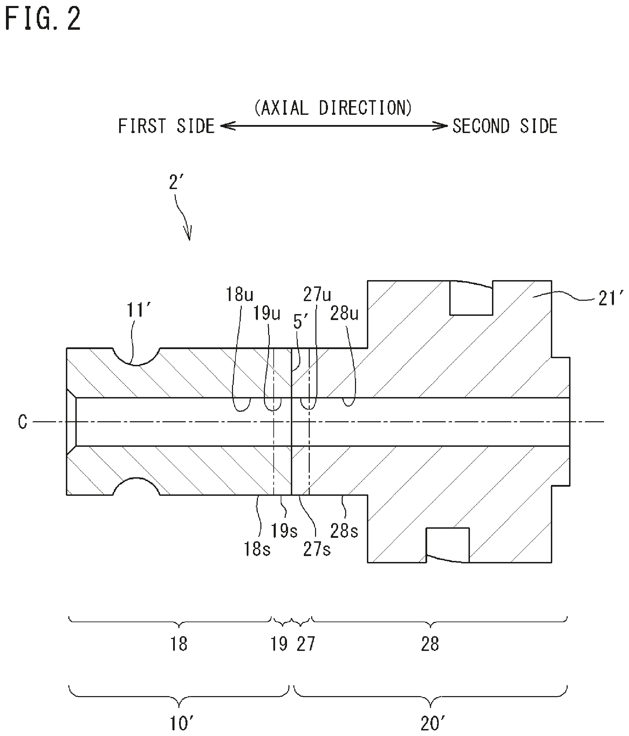

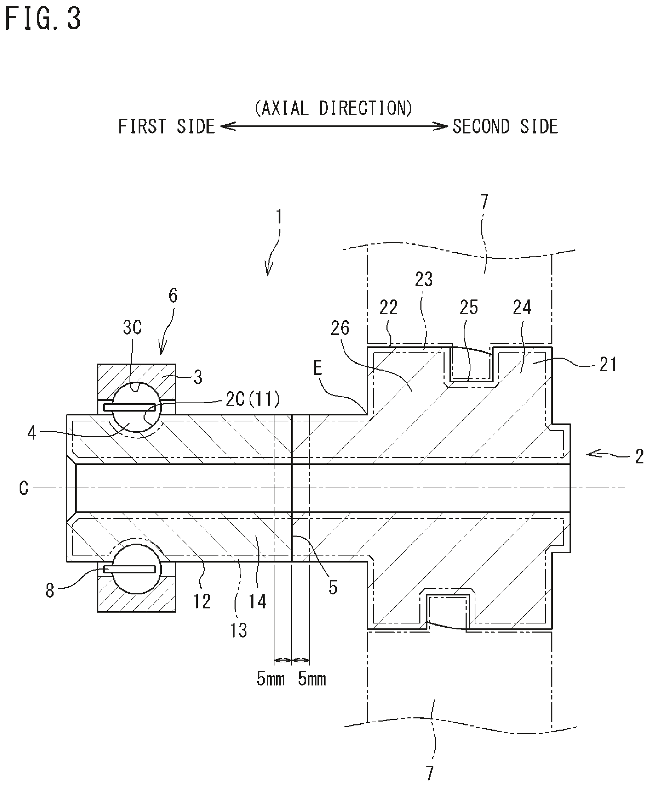

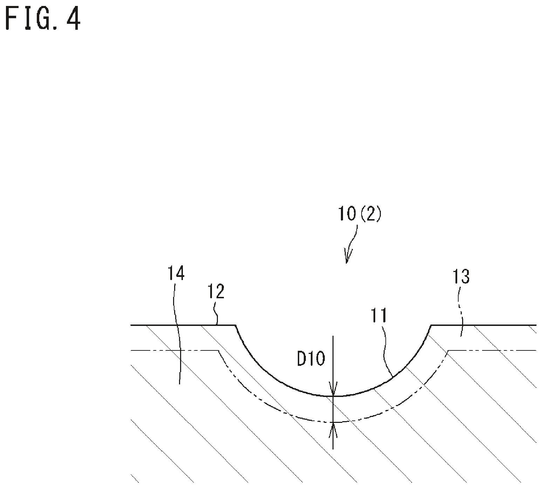

FIG. 1 is a schematic sectional view of a bearing raceway component according to the present embodiment. FIG. 2 is a schematic sectional view of a shaft component according to the present embodiment. FIG. 3 is a schematic sectional view of a bearing device including the bearing raceway component in FIG. 2. FIG. 4 is a partially enlarged view of FIG. 1. FIG. 4 shows part of an area A in FIG. 1. The shaft component according to the present embodiment is a shaft component for manufacture of the bearing raceway component according to the present embodiment by carburizing or carbonitriding. First, a bearing device 1 according to the present embodiment will be described. Then, a bearing raceway component 2 and a shaft component 2' will be described in detail.

As shown in FIG. 3, the bearing device 1 includes the bearing raceway component 2, an outer ring 3, a cage 8, and a plurality of balls (rolling elements) 4. The bearing raceway component 2 has a central axis C. One axial side of the central axis C is defined as a first axial side, and the other axial side is defined as a second axial side. In the following description, a direction orthogonal to the central axis C is referred to as a radial direction. A direction about the central axis C is referred to as a circumferential direction. FIGS. 1 to 3 show cross sections taken along an imaginary plane passing through the central axis C.

The outer ring 3 includes an outer ring raceway 3c. The bearing raceway component 2 includes an inner ring raceway 2c (raceway groove 11 described later). The plurality of balls 4 is disposed between the outer ring raceway 3c and the inner ring raceway 2c and held by the cage 8.

As shown in FIG. 1, the bearing raceway component 2 is a cylindrical shaft member. The bearing raceway component 2 includes a bearing portion 10 having a raceway and a power transmission portion 20 having teeth for transmitting power. The bearing portion 10 having the raceway is located on the first axial side of the power transmission portion 20 having the teeth. The power transmission portion 20 having the teeth is located on the second axial side of the bearing portion 10 having the raceway. The bearing portion 10 having the raceway and the power transmission portion 20 having the teeth are joined at a joining surface 5 by friction welding. The bearing raceway component 2 is a two-part integrated member.

The bearing raceway component 2 is a member that includes an inner ring raceway of a bearing and teeth of an external gear on the outer circumferential surface of an integrated shaft member. Therefore, the bearing raceway component 2 can be made smaller than components that have the same functions as the bearing raceway component 2 with a bearing inner ring and/or an external gear press-fitted onto a shaft.

In the bearing raceway component 2, the diameter of an outer circumferential surface 12 of the bearing portion 10 having the raceway is smaller than the root diameter of the power transmission portion 20 having the teeth. In this case, it is easy to mesh teeth 21 of the external gear with teeth 7 of a gear mated with the external gear. A portion of the power transmission portion 20 having the teeth with a diameter equal to or smaller than the root diameter is a root cylinder portion 26, and a portion of the power transmission portion 20 having the teeth with a diameter larger than the root diameter is the teeth 21.

The bearing portion 10 having the raceway includes the raceway groove 11 serving as the inner ring raceway 2c on part of its outer circumferential surface. The raceway groove 11 is located at a position axially spaced from the joining surface 5 by 5 mm or more. Therefore, good durability is obtained. As described above, the bearing portion 10 having the raceway is combined with the outer ring 3, the cage 8, and the plurality of balls 4 to form a ball bearing that is a rolling bearing 6.

The power transmission portion 20 having the teeth serves to transmit power between the bearing raceway component 2 and an element other than the bearing raceway component 2 by means of the teeth. The power transmission portion 20 having the teeth includes the gear teeth 21 for transmitting power on part of its outer circumferential surface. The teeth 21 are helical gear teeth. The teeth 21 mesh with the teeth 7, 7 of another gear (see FIG. 3). Therefore, power can be transmitted from and to the element other than the bearing raceway component 2. The teeth 21 are located at a position axially spaced from the joining surface 5 by 5 mm or more. Therefore, good durability is obtained. The power transmission portion 20 having the teeth includes a corner (recessed corner) E (see FIG. 3). The corner E is a portion where quenching is difficult during heat treatment. Moreover, the corner E is a portion where stress concentration is likely to occur. From this viewpoint, it is preferable that the corner E be not provided in a portion axially spaced from the joining surface 5 by less than 5 mm.

The bearing raceway component 2 is manufactured by carburizing or carbonitriding the shaft component 2'. As shown in FIG. 2, the shaft component 2' is a cylindrical shaft member. The shaft component 2' includes a first portion 10' that is carburized or carbonitrided to serve as the bearing portion 10 having the raceway, and a second portion 20' that is carburized or carbonitrided to serve as the power transmission portion 20 having the teeth for transmitting power.

The first portion 10' is located on the first axial side of the second portion 20'. The second portion 20' is located on the second axial side of the first portion 10'. The first portion 10' and the second portion 20' are joined at a joining surface 5' by friction welding. The shaft component 2' is a two-part integrated member.

The raw material of the first portion 10' is a first steel material. The first steel material is preferably a steel material suitable for raceway components of rolling bearings. None of the surfaces of the first portion 10' are subjected to carburizing treatment or carbonitriding treatment. The raw material of the second portion 20' is a second steel material. The second steel material is preferably a steel material suitable for gears, splines, toothed pulleys, etc. None of the surfaces of the second portion 20' are subjected to carburizing treatment or carbonitriding treatment. The alloy composition of the first steel material is different from the alloy composition of the second steel material.

When the first portion 10' made of the steel material and the second portion 20' made of the steel material are joined by friction welding, the hardnesses of portions in the vicinity of the joining surface 5' are greater than the hardnesses of the raw materials. Therefore, the first portion 10' includes a third portion 19 having a predetermined hardness and a fifth portion 18 located on the first axial side (side spaced away from the joining surface) of the third portion 19. The third portion 19 includes the joining surface 5' on the second axial side. The second portion 20' includes a fourth portion 27 having a predetermined hardness and a sixth portion 28 located on the second axial side (side spaced away from the joining surface) of the fourth portion 27. The fourth portion 27 includes the joining surface 5' on the first axial side.

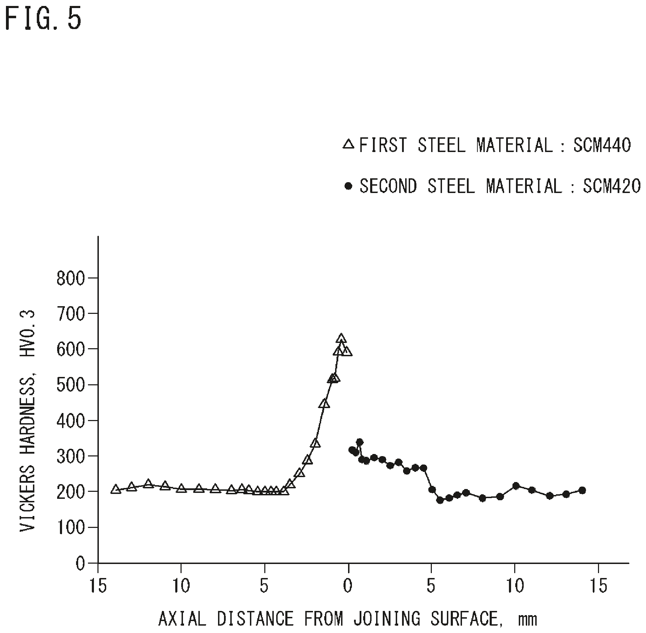

The division of the first portion 10' into the third portion 19 and the fifth portion 18 and the division of the second portion 20' into the fourth portion 27 and the sixth portion 28 will be described in more detail. FIG. 5 is a graph showing a Vickers hardness measured in a cross section including the central axis C of the shaft member 2'. In FIG. 5, the vertical axis represents the Vickers hardness, and the horizontal axis represents an axial distance from the joining surface. In FIG. 5, the position at an axial distance of 0 mm is the position of the joining surface 5'. In FIG. 5, an area leftward of the axial distance of 0 mm shows a Vickers hardness measured in a cross section of the first portion 10', and an area rightward of the axial distance of 0 mm shows a Vickers hardness measured in a cross section of the second portion 20'. The Vickers hardness shown in FIG. 5 is a Vickers hardness at a position that is 2 mm deep from the surface in the cross section including the central axis C of the shaft member 2', and is measured along the axial direction.

The measurement results shown in FIG. 5 are results of an example in which the first steel material is SCM440 and the second steel material is SCM420. The compositions (mass%) of the first steel material (SCM440) and the second steel material (SCM420) are shown in Table 1.

**[Table 1]**

| | | | | | | | | Mass of alloying element in steel material, total mass of alloying elements (mass%) |
|---|---|---|---|---|---|---|---|---|
| | C | Si | Mn | Ni | Cr | Mo | Mn + Ni + Cr + Mo | **(Mn** + **Ni +** Cr + Mo) × 1.5 |
| SCM440 | 0.40 | 0.17 | 0.60 | 0.02 | 1.20 | 0.25 | 2.07 | 3.11 |
| SCM420 | 0.20 | 0.17 | 0.81 | 0.07 | 0.98 | 0.25 | 2.11 | 3.17 |

In Table 1, carbon is represented by C, manganese is represented by Mn, nickel is represented by Ni, chromium is represented by Cr, molybdenum is represented by Mo, and silicon is represented by Si.

As shown in the graph of FIG. 5, in the shaft component 2' in which the first portion 10' made of the steel material and the second portion 20' made of the steel material are joined by friction welding, the hardnesses of the portions in the vicinity of the joining surface 5' are greater than the hardnesses of the raw materials. In each area axially spaced from the joining surface 5' by more than 5 mm, the Vickers hardness is substantially constant, and this hardness is the hardness of each raw material.

In the shaft component according to the embodiment of the present invention, the third portion 19, the fifth portion 18, the fourth portion 27, and the sixth portion 28 are determined based on the results of measurement of the Vickers hardness in the cross section including the central axis C. The joining surface 5' is located at the axial distance of 0.0 mm. The third portion 19 and the fifth portion 18 in the first portion 10' are determined by the following method. The Vickers hardness is measured at five positions in the first portion 10' that are axially spaced from the joining surface 5' by 10.0 mm, 11.0 mm, 12.0 mm, 13.0 mm, and 14.0 mm, and the average value is calculated. Further, a value that is 1.2 times as large as the obtained average value is calculated. The calculated value is a reference hardness. Then, the Vickers hardness is measured at positions of 0.2 mm, 0.4 mm, 0.6 mm, 0.8 mm, 1.0 mm, 1.5 mm, 2.0 mm, 2.5 mm, 3.0 mm, 3.5 mm, 4.0 mm, 4.5 mm, 5.0 mm, 5.5 mm, 6.0 mm, 6.5 mm, 7.0 mm, 8.0 mm, and 9.0 mm from the joining surface 5' toward the first axial side. The portion from the joining surface 5' to a point where the measured value is less than the reference hardness is the third portion 19 of the first portion 10'. The portion of the first portion 10' that is farther from the joining surface 5' than the third portion 19 is the fifth portion 18.

The fourth portion 27 and the sixth portion 28 in the second portion 20' are determined by the following method. The Vickers hardness is measured at five positions in the second portion 20' that are axially spaced from the joining surface 5' by 10.0 mm, 11.0 mm, 12.0 mm, 13.0 mm, and 14.0 mm, and the average value is calculated. Further, a value that is 1.2 times as large as the obtained average value is calculated. The calculated value is a reference hardness. Then, the Vickers hardness is measured at positions of 0.2 mm, 0.4 mm, 0.6 mm, 0.8 mm, 1.0 mm, 1.5 mm, 2.0 mm, 2.5 mm, 3.0 mm, 3.5 mm, 4.0 mm, 4.5 mm, 5.0 mm, 5.5 mm, 6.0 mm, 6.5 mm, 7.0 mm, 8.0 mm, and 9.0 mm from the joining surface 5' toward the second axial side. The portion from the joining surface 5' to a point where the measured value is less than the reference hardness is the fourth portion 27 of the second portion 20'. The portion of the second portion 20' that is farther from the joining surface 5' than the fourth portion 27 is the sixth portion 28. In FIG. 5, part of the measured values is plotted.

In the first portion 10' of the shaft component 2', the hardness of the third portion 19 is greater than the hardness of the fifth portion 18. In the second portion 20' of the shaft component 2', the hardness of the fourth portion 27 is greater than the hardness of the sixth portion 28.

The shaft component 2' includes, in the first portion 10', a portion 11' that will serve as the raceway 11 through subsequent steps. The entire portion 11' serving as the raceway 11 is located in the fifth portion 18 of the first portion 10', but not in the third portion 19. Thus, it is possible to avoid the inconvenience that would occur if the portion 11' serving as the raceway 11 were provided on the portion that has been hardened by the above friction welding.

The shaft component 2' includes, in the second portion 20', a portion 21' that will serve as the teeth 21 through subsequent steps. The entire portion 21' serving as the teeth 21 is located in the sixth portion 28 of the second portion 20', but not in the fourth portion 27. Thus, it is possible to avoid the inconvenience that would occur if the portion 21' serving as the teeth 21 were provided on the portion that has been hardened by the above friction welding.

In the shaft component 2', it is preferable that an outer circumferential surface 18s of a portion of the fifth portion 18 on the second axial side, an outer circumferential surface 19s of the third portion 19, an outer circumferential surface 27s of the fourth portion 27, and an outer circumferential surface 28s of a portion of the sixth portion 28 on the first axial side define a single cylindrical surface. In this way, when the outer circumferential surfaces of the four portions are formed as the single cylindrical surface, steps (corners) are unlikely to be formed in the portions even after carburizing or carbonitriding. It is possible to avoid an increase in risk of damage due to the formation of steps (corners).

In the shaft component 2', it is preferable that an inner circumferential surface 18u of the portion of the fifth portion 18 on the second axial side, an inner circumferential surface 19u of the third portion 19, an inner circumferential surface 27u of the fourth portion 27, and an inner circumferential surface 28u of the portion of the sixth portion 28 on the first axial side define a single cylindrical surface. In this way, when the inner circumferential surfaces of the four portions are formed as the single cylindrical surface, steps (corners) are unlikely to be formed in the portions even after carburizing or carbonitriding. It is possible to avoid an increase in risk of damage due to the formation of steps (corners).

As described above, the alloy composition of the first steel material is different from the alloy composition of the second steel material. The bearing raceway component 2 manufactured by carburizing or carbonitriding the shaft component 2' has both the strength suitable for the raceway in the bearing portion having the raceway and the strength suitable for the teeth in the power transmission portion having the teeth.

The first steel material contains, for example, carbon as an alloy component. Examples of the first steel material include alloy steel materials for machine structural use, such as chromium steel, chromium molybdenum steel, and nickel chromium molybdenum steel. Specific examples of the first steel material include SCr420, SCM420, SNCM420, SCM440, and SNCM439.

The second steel material contains, for example, carbon as an alloy component. Examples of the second steel material include alloy steel materials for machine structural use, such as chromium steel, chromium molybdenum steel, and nickel chromium molybdenum steel. Specific examples of the second steel material include SCr420, SCM420, and SNCM420.

The first steel material and the second steel material preferably satisfy at least one of the first to fourth combinations described below. The first steel material and the second steel material may satisfy two or more of the first to fourth combinations described below.

### (First Combination)

The first steel material contains at least one of manganese, nickel, chromium, and molybdenum as an alloy component. The second steel material contains at least one of manganese, nickel, chromium, and molybdenum as an alloy component. The total content (mass%) of manganese, nickel, chromium, and molybdenum of the first steel material is more than 1.5 times as large as the total content (mass%) of manganese, nickel, chromium, and molybdenum of the second steel material.

In this case, when the shaft component 2' including the first portion 10' made of the first steel material as the raw material and the second portion 20' made of the second steel material as the raw material is quenched, the quenchability of the first portion 10' including the portion serving as the raceway tends to excel the quenchability of the second portion 20' including the portion serving as the teeth. Therefore, in the manufactured bearing raceway component 2, the depth of the range with a hardness of 700 HV or more in the inner ring raceway 2c of the bearing portion 10 having the raceway is likely to be greater than the depth of the range with a hardness of 700 HV or more in the bottom land between two adjacent teeth of the power transmission portion 20 having the teeth.

When the first combination is satisfied, the total content of manganese, nickel, chromium, and molybdenum in the first steel material is preferably 2.5 mass% or more and 6.5 mass% or less, and the total content of manganese, nickel, chromium, and molybdenum in the second steel material is preferably 1.5 mass% or more and 2.5 mass% or less.

### (Second Combination)

The first steel material contains silicon as an alloy component. The second steel material contains silicon as an alloy component. The content (mass%) of silicon of the first steel material is less than the content (mass%) of silicon of the second steel material. In this case, when carburizing or carbonitriding is performed, the penetration of carbon into the first steel material that is the raw material of the first portion 10' including the portion serving as the raceway is less inhibited than the penetration of carbon into the second steel material that is the raw material of the second portion 20' including the portion serving as the teeth.

When the second combination is satisfied, the content of silicon in the first steel material is preferably 0.10 mass% or more and 0.34 mass% or less, and the content of silicon in the second steel material is preferably 0.35 mass% or more and 1.00 mass% or less.

### (Third Combination)

The first steel material does not contain chromium as an alloy component or contains chromium in an amount of 1.6 mass% or less, and does not contain niobium as an alloy component or contains niobium in an amount of 0.01 mass% or less. The second steel material contains, as alloy components, chromium in an amount of 1.0 mass% or more and 2.5 mass% or less, and niobium in an amount of 0.02 mass% or more and 0.10 mass% or less. When a steel material containing niobium and chromium is carburized or carbonitrided after cutting, carbon is unlikely to penetrate into the steel material. In other words, the surface carbon content of the cut steel material containing niobium and chromium does not increase even when it is carburized or carbonitrided. The reason for this is that a chromium oxide film is formed on the surface of the steel material during carburizing or carbonitriding, which inhibits the penetration of carbon into the steel material. Therefore, the steel material containing niobium and chromium cannot improve the flaking life of the bearing even when it is carburized or carbonitrided. From this viewpoint, in the third combination, the first steel material does not contain niobium, or when it contains niobium, the content is 0.01 mass% or less.

It is preferable that the steel material used in the power transmission portion having the teeth do not have an excessively large surface carbon content from the viewpoint of improving the bending fatigue strength of the bottom land and improving the toughness of the tooth tip. Therefore, it is preferable that the second steel material be one in which carbon is unlikely to penetrate into the steel material even when it is carburized or carbonitrided. From this viewpoint, in the third combination, the content of niobium of the second steel material is within the above range.

When the third combination is satisfied, the first steel material may contain chromium in an amount of 1.6 mass% or less, or may contain no chromium. Chromium is contained to form a chromium carbide that improves the flaking life, and to improve quenchability. The second steel material contains chromium, and the content of chromium is preferably 1.0 mass% or more and 2.5 mass% or less. Chromium is contained to improve quenchability. In this case, when the second steel material is carburized or carbonitrided, a chromium oxide film suitable for suppressing the penetration of carbon is formed on the second steel material.

### (Fourth Combination)

The first steel material contains nitrogen as an alloy component in an amount of 0.001 mass% or more and 0.050 mass% or less, does not contain boron as an alloy component or contains boron in an amount of 0.001 mass% or less, and does not contain titanium as an alloy component or contains titanium in an amount of 0.003 mass% or less. The second steel material contains, as alloy components, nitrogen in an amount of 0.001 mass% or more and 0.050 mass% or less, boron in an amount of 0.001 mass% or more and 0.005 mass% or less, and titanium in an amount of 0.01 mass% or more and 0.08 mass% or less. In the case of this combination, a decrease in life of the bearing portion 10 having the raceway can be suppressed in the completed bearing raceway component. Further, the power transmission portion 20 having the teeth can ensure an appropriate bending fatigue strength.

When the steel material contains nitrogen and boron, BN (boron nitride) is likely to precipitate. The precipitation of the boron nitride causes a decrease in life of the bearing portion. When the steel material contains nitrogen and titanium, TiN (titanium nitride) is likely to precipitate. The precipitation of the titanium nitride also causes a decrease in life of the bearing portion. Therefore, in the fourth combination, the first steel material contains nitrogen, does not contain boron or contains boron in an amount of 0.001 mass% or less, and does not contain titanium or contains titanium in an amount of 0.003 mass% or less.

When the steel material contains boron, boron concentrates at the grain boundaries, thereby strengthening the grain boundaries and improving the bending fatigue strength. When boron is simply added to the steel material containing nitrogen, however, boron cannot concentrate at the grain boundaries because BN (boron nitride) precipitates. Therefore, when Ti (titanium) is contained together with boron, TiN (titanium nitride) is precipitated to reduce the amount of nitrogen to be bonded with boron, thereby achieving the concentration of boron at the grain boundaries. Therefore, in the fourth combination, the second steel material contains, as alloy components, nitrogen, boron in an amount of 0.001 mass% or more and 0.005 mass% or less, and titanium in an amount of 0.01 mass% or more and 0.08 mass% or less.

In the combination of the first steel material and the second steel material, it is preferable that the content (mass%) of carbon of the first steel material be more than the content (mass%) of carbon of the second steel material (hereinafter, this combination is also referred to as a fifth combination). In this case, the penetration depth of carbon that penetrates into the steel material by carburizing or carbonitriding is likely to be greater in the bearing portion 10 having the raceway than in the power transmission portion 20 having the teeth. Therefore, the depth of the range with a hardness of 700 HV or more in the bearing portion 10 having the raceway is likely to be greater than the depth of the range with a hardness of 700 HV or more in the power transmission portion 20 having the teeth.

The content of carbon of the first steel material is preferably 0.25 mass% or more and 1.10 mass% or less. The content of carbon of the second steel material is preferably 0.15 mass% or more and 0.25 mass% or less.

It is preferable that the number of non-metallic inclusions having a width of 30 µm or more and contained in the first steel material be smaller than the number of non-metallic inclusions having a width of 30 µm or more and contained in the second steel material. In this case, the inner ring raceway 2c of the bearing portion 10 having the raceway in the bearing device 1 is a raceway that is easy to improve the bearing life.

The bearing raceway component 2 is manufactured by carburizing or carbonitriding the shaft component 2'. As shown in FIG. 1, in the bearing raceway component 2, the bearing portion 10 having the raceway includes a first surface hardened layer 13 and a first inner portion 14. The first surface hardened layer 13 is provided along the surface including the outer circumferential surface 12 of the bearing portion 10 having the raceway. The first inner portion 14 is provided opposite to the surface including the outer circumferential surface 12 of the bearing portion 10 having the raceway with respect to the first surface hardened layer 13. The first surface hardened layer 13 is a carburized layer or a carbonitrided layer. Therefore, the first surface hardened layer 13 refers to an area where the carbon content is larger than that of the first steel material before the carburizing treatment or the carbonitriding treatment. When the carbon content of the bearing portion 10 having the raceway is measured from the outer circumferential surface in the depth direction (direction perpendicular to the outer circumferential surface), the carbon content of the bearing portion 10 having the raceway gradually decreases and no longer changes at a certain depth (referred to as a first depth D1 in the present disclosure). The range from the surface including the outer circumferential surface 12 of the bearing portion 10 having the raceway to the first depth D1 corresponds to the first surface hardened layer 13. The average hardness of the first surface hardened layer 13 is greater than the average hardness of the first inner portion 14. Therefore, the first surface hardened layer 13 in the bearing portion 10 having the raceway contributes to extending the life of the bearing.

In the bearing raceway component 2, the power transmission portion 20 having the teeth includes a second surface hardened layer 23 and a second inner portion 24. The second surface hardened layer 23 is provided along the surface including an outer circumferential surface 22 of the power transmission portion 20 having the teeth. The second inner portion 24 is provided opposite to the surface including the outer circumferential surface 22 of the power transmission portion 20 having the teeth with respect to the second surface hardened layer 23. The second surface hardened layer 23 is a carburized layer or a carbonitrided layer. Therefore, the second surface hardened layer 23 refers to an area where the carbon content is larger than that of the second steel material before the carburizing treatment or the carbonitriding treatment. When the carbon content of the power transmission portion 20 having the teeth is measured from the outer circumferential surface in the depth direction (direction perpendicular to the outer circumferential surface), the carbon content of the power transmission portion 20 having the teeth gradually decreases and no longer changes at a certain depth (referred to as a second depth D2 in the present disclosure). The range from the surface including the outer circumferential surface 22 of the power transmission portion 20 having the teeth to the second depth D2 corresponds to the second surface hardened layer 23. The average hardness of the second surface hardened layer 23 is greater than the average hardness of the second inner portion 24. Therefore, the second surface hardened layer 23 in the power transmission portion 20 having the teeth contributes to extending the life of the power transmission portion 20 having the teeth.

The first surface hardened layer 13 and the second surface hardened layer 23 are connected to each other. The first inner portion 14 and the second inner portion 24 are connected to each other. The bearing raceway component 2 includes the surface hardened layers 13, 23 in the entire surface including the outer circumferential surfaces 12, 22 of the cylindrical shaft member. The first surface hardened layer 13 and the second surface hardened layer 23 are formed through carburizing treatment or carbonitriding treatment. The carburizing treatment and the carbonitriding treatment will be described in detail later.

A depth D10 from the surface of the inner ring raceway 2c (raceway groove 11) of the bearing portion 10 having the raceway in the bearing raceway component 2 in the range with a hardness of 700 HV or more is greater than a depth D20 from the surface of a bottom land 25 between two adjacent teeth 21 of the power transmission portion 20 having the teeth in the range with a hardness of 700 HV or more. In this case, the bearing life of the inner ring raceway 2c of the bearing raceway component 2 is likely to be good, and the strength of the bottom land 25 and the pitting strength of the usable tooth flanks of the bearing raceway component 2 are also likely to be good due to compressive stress applied to the teeth.

The depth D10 from the surface of the inner ring raceway 2c in the bearing portion 10 having the raceway is a depth in the direction perpendicular to the surface of the inner ring raceway 2c. The depth D20 from the surface of the teeth 21 in the power transmission portion 20 having the teeth is a depth from the surface of the bottom land 25 between two adjacent teeth 21. The depth from the surface of the bottom land 25 is a depth in the direction perpendicular to the surface of the bottom land 25. When the hardness of the teeth 21 of the power transmission portion 20 having the teeth is measured in the depth direction, the bottom land 25 between two adjacent teeth 21 is subjected to measurement. This is because the root cylinder portion 26 is present in the depth direction perpendicular to the surface of the bottom land 25 between two adjacent teeth 21 and therefore a position deeper than the depth D20 from the surface in the range with a hardness of 700 HV or more always remains.

In the inner ring raceway 2c of the bearing portion 10 having the raceway, the depth D10 from the surface of the inner ring raceway 2c in the range with a hardness of 700 HV or more is preferably 0.2 mm or more and 2.0 mm or less. In the bottom land 25 between two adjacent teeth 21 of the power transmission portion 20 having the teeth, the depth D20 from the surface of the bottom land 25 between two adjacent teeth 21 in the range with a hardness of 700 HV or more is preferably 0.1 mm or more and 1.0 mm or less.

The depth from the surface of the raceway of the bearing portion having the raceway in the range with a hardness of 700 HV (hard portion) or more is considered as follows. In the raceway of the bearing portion having the raceway, it is required to extend the rolling fatigue life until internally initiated flaking initiated from non-metallic inclusions inside the raceway occurs. The rolling fatigue life of the bearing portion having the raceway in the range with a hardness of 700 HV (hard portion) or more when the depth from the surface of the raceway is greater is longer than the rolling fatigue life when the depth is smaller. In the raceway, it is required to suppress formation of Brinell indentations in the raceway of the bearing portion having the raceway due to the rolling elements being statically pressed against the raceway of the bearing portion having the raceway. The formation of Brinell indentations in the bearing portion having the raceway in the range with a hardness of 700 HV (hard portion) or more when the depth from the surface of the raceway is greater is suppressed compared to the formation of Brinell indentations when the depth is smaller. For this reason, it is desirable that the range with a hardness of 700 HV (hard portion) or more be present from the surface of the raceway to a deep position in the bearing portion having the raceway.

The depth from the surface of the bottom land between two adjacent teeth of the power transmission portion having the teeth in the range with a hardness of 700 HV (hard portion) or more is considered as follows. It is required to suppress pitting damage to the outermost usable tooth flanks of the teeth of the power transmission portion having the teeth. For this reason, the teeth of the power transmission portion having the teeth are required to have a hardness of 700 HV (hard portion) or more on the surfaces of the teeth. The teeth of the power transmission portion having the teeth are required to have an uneven shape, have a core structure (non-carburized structure) inside the projecting teeth of the power transmission portion having the teeth, and have a hard portion (carburized structure) on the surfaces of the teeth of the power transmission portion having the teeth. When the inside of the teeth of the power transmission portion having the teeth is a hard portion (carburized structure), the toughness of the teeth of the power transmission portion having the teeth decreases. Therefore, the teeth are likely to break. For this reason, it is desirable that the range with a hardness of 700 HV (hard portion) or more remain at a shallow position from the surface of the teeth of the power transmission portion having the teeth. The above description relates to the teeth (projecting portions) of the power transmission portion having the teeth. The depth from the surface of the teeth of the power transmission portion 20 having the teeth with a hardness of 700 HV or more can be substituted with the depth from the surface of the bottom land between two adjacent teeth of the power transmission portion 20 having the teeth with a hardness of 700 HV or more. Therefore, it is desirable that the range with a hardness of 700 HV or more in the bottom land between two adjacent teeth of the power transmission portion 20 having the teeth remain at a shallow position from the surface of the bottom land similarly to the teeth (projecting portions).

The depth D10 in the inner ring raceway 2c of the bearing portion 10 having the raceway is measured by the following method. First, the bearing raceway component 2 is cut along a plane including the central axis to pass through the inner ring raceway 2c. Next, a Vickers indenter is applied to the obtained cut surface from the surface (outer circumferential surface) toward the inside in the depth direction (direction perpendicular to the tangent to the outer circumferential surface in the cross section) at positions of 50 µm, 100 µm, 150 µm, 200 µm, 300 µm, 400 µm, 600 µm, 800 µm, 1000 µm, 1200 µm, 1400 µm, 1600 µm, 1800 µm,2000 µm, 2500 µm, and 3000 µm from the surface to measure the Vickers hardness at each position. The change in Vickers hardness is plotted, and the depth in the range with a hardness of 700 HV or more is calculated by interpolation. The measurement of the depth D20 in the teeth 21 of the power transmission portion 20 having the teeth is performed in the same manner as the measurement of the depth D 10, except that the cutting location is changed. In the measurement of the depth D20, the bearing raceway component 2 is cut along a plane perpendicular to the central axis to pass through the teeth 21 of the power transmission portion 20 having the teeth.

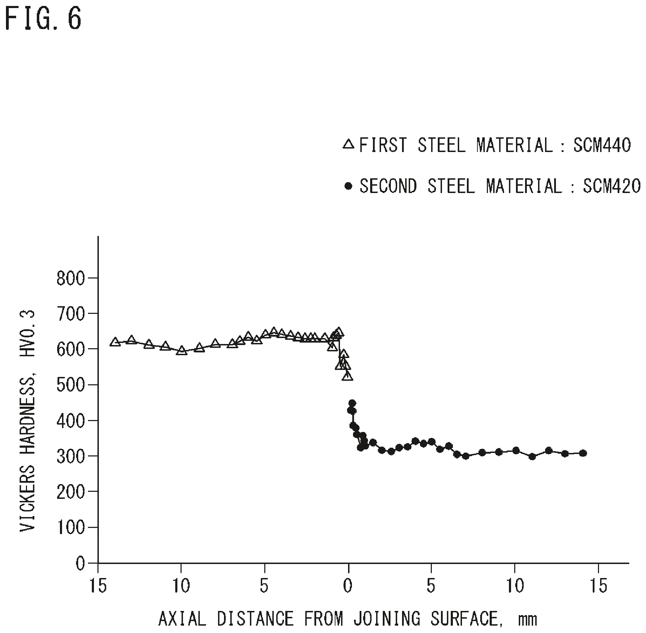

The results of measurement of the Vickers hardnesses of the inside of the bearing raceway component 2 and the surface hardened layers 13, 23 are shown in FIGS. 6 to 8. The measurement results shown in FIGS. 6 to 8 are measurement results for the bearing raceway component 2 manufactured by performing heat treatment on the shaft component 2' in which the first steel material is SCM440 and the second steel material is SCM420 with its measurement results shown in FIG. 5. In FIG. 6, the position at the axial distance of 0 mm is the position of the joining surface 5. The compositions (mass%) of the first steel material (SCM440) and the second steel material (SCM420) have already been shown in Table 1.

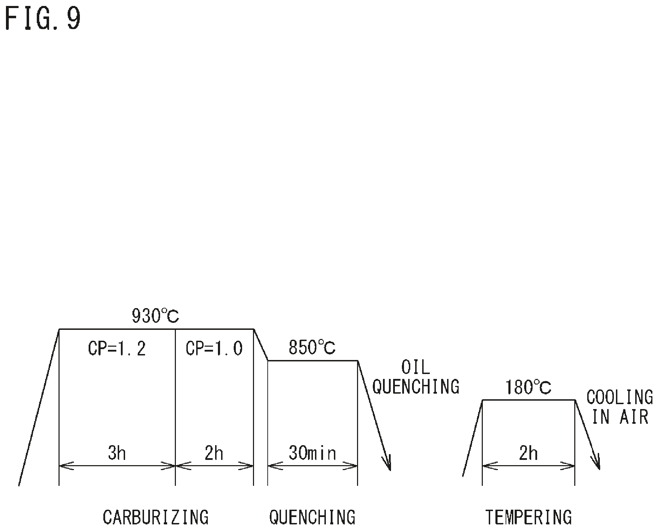

The conditions of the heat treatment performed on the shaft component 2' in which the first steel material is SCM440 and the second steel material is SCM420 are as shown in FIG. 9. That is, the shaft component 2' was held in a carburizing atmosphere at a temperature of 930°C and a carbon potential of 1.2 for 3 hours. Then, the carbon potential was changed to 1.0 and the shaft component 2' was held for 2 hours. Then, the shaft component 2' was held at 850°C for 30 minutes, and then subjected to oil quenching. Further, the shaft component 2' subjected to the oil quenching was held at 180°C for 2 hours as tempering treatment, and then cooled in air. By subjecting the shaft component 2' to this heat treatment, a carburized layer was formed on the outer circumferential surface. Further, the shaft component 2' on which the carburized layer was formed was subjected to grinding, and the inner ring raceway and the gear teeth were finished to form the bearing raceway component 2.

FIG. 6 is a graph showing a Vickers hardness in the cross section including the central axis C of the bearing raceway component 2. In FIG. 6, the vertical axis represents the Vickers hardness, and the horizontal axis represents the axial distance from the joining surface 5. An area leftward of the axial distance of 0.0 mm in FIG. 6 shows the Vickers hardness of the inside of the bearing portion 10 having the raceway. The Vickers hardness is measured at positions of 0.1 mm, 0.2 mm, 0.3 mm, 0.4 mm, 0.5 mm, 0.6 mm, 0.7 mm, 0.8 mm, 0.9 mm, 1.0 mm, 1.5 mm, 2.0 mm, 2.5 mm, 3.0 mm, 3.5 mm, 4.0 mm, 4.5 mm, 5.0 mm, 5.5 mm, 6.0 mm, 6.5 mm, 7.0 mm, 8.0 mm, 9.0 mm, 10.0 mm, 11.0 mm, 12.0 mm, 13.0 mm, and 14.0 mm from the joining surface 5 toward the first axial side. An area rightward of the axial distance of 0.0 mm in FIG. 6 shows the Vickers hardness of the inside of the power transmission portion 20 having the teeth. The Vickers hardness is measured at positions of 0.1 mm, 0.2 mm, 0.3 mm, 0.4 mm, 0.5 mm, 0.6 mm, 0.7 mm, 0.8 mm, 0.9 mm, 1.0 mm, 1.5 mm, 2.0 mm, 2.5 mm, 3.0 mm, 3.5 mm, 4.0 mm, 4.5 mm, 5.0 mm, 5.5 mm, 6.0 mm, 6.5 mm, 7.0 mm, 8.0 mm, 9.0 mm, 10.0 mm, 11.0 mm, 12.0 mm, 13.0 mm, and 14.0 mm from the joining surface 5 toward the second axial side. The Vickers hardness shown in FIG. 6 is a Vickers hardness at a position that is 2 mm deep from the surface in the cross section including the central axis C of the bearing raceway component 2, and is measured along the axial direction. As shown in FIG. 6, the bearing raceway component 2 is harder than the raw material.

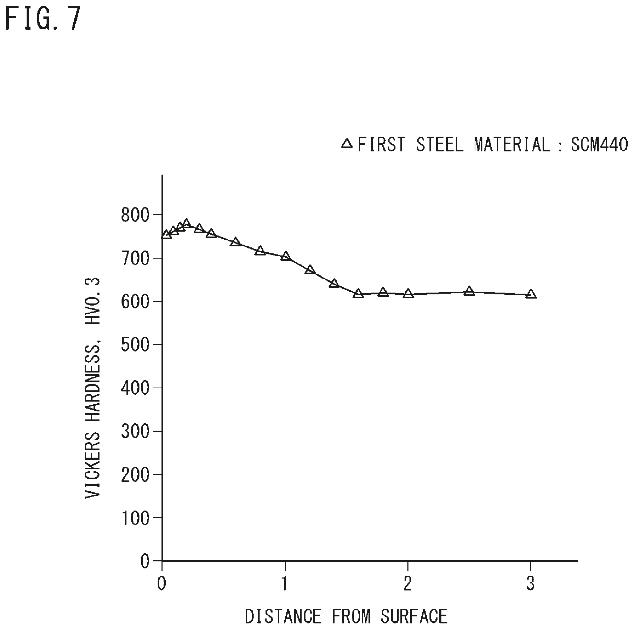

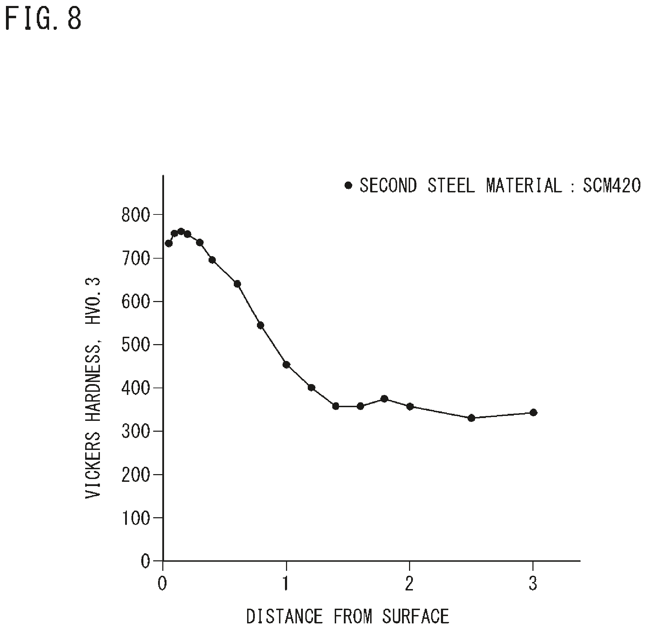

FIGS. 7 and 8 are graphs each showing a change in Vickers hardness from the surface toward the inside of the bearing raceway component 2. FIG. 7 shows the Vickers hardness of the bearing portion 10 having the raceway, and FIG. 8 shows the Vickers hardness of the power transmission portion 20 having the teeth.

Each Vickers hardness was measured by the following method. First, the bearing raceway component 2 was cut at two locations. One of the cutting locations is the portion where the inner ring raceway is provided. The other cutting location is the portion where the gear teeth are provided. First, the portion where the gear teeth were provided was cut along a plane perpendicular to the central axis, and then the portion where the inner ring raceway was provided was cut along a plane including the central axis. Each Vickers hardness of the bearing portion 10 having the raceway was measured by applying a Vickers indenter at each of the positions of 50 µm, 100 µm, 150 µm, 200 µm, 300 µm, 400 µm, 600 µm, 800 µm, 1000 µm, 1200 µm, 1400 µm, 1600 µm,1800 µm, 2000 µm, 2500 µm, and 3000 µm from the surface of the inner ring raceway in the depth direction (see FIG. 7). Each Vickers hardness of the power transmission portion 20 having the teeth was measured by applying a Vickers indenter at each of the positions of 50 µm, 100 µm, 150 µm, 200 µm, 300 µm, 400 µm, 600 µm, 800 µm, 1000 µm, 1200 µm, 1400 µm, 1600 µm, 1800 µm, 2000 µm, 2500 µm, and 3000 µm from the surface of the bottom land between two adjacent teeth in the depth direction (see FIG. 8).

As shown in FIGS. 7 and 8, it has been observed that the bearing raceway component 2 has preferable Vickers hardnesses in the inside and the surface hardened layers 13, 23 of the bearing portion 10 having the raceway and the power transmission portion 20 having the teeth.

In the preferred bearing raceway component 2, the content (mass%) of carbon contained within the range of 50 µm deep from the surface of the inner ring raceway 2c of the bearing portion 10 having the raceway is more than the content (mass%) of carbon contained within the range of 50 µm deep from the surface of the bottom land 25 between two adjacent teeth 21 of the power transmission portion 20 having the teeth. In this case, the bearing life on the inner ring raceway 2C of the bearing raceway component 2 is likely to be good, the amount of coarse carbides in the teeth 21 of the bearing raceway component 2 is likely to be small, and the tooth tip strength is likely to be good. The position of measurement of the depth of the content of carbon contained within the range from the surface of the teeth 21 of the power transmission portion 20 having the teeth is the bottom land 25 between two adjacent teeth 21. The reason for the measurement at the bottom land 25 between two adjacent teeth 21 is that the root cylinder portion 26 is present in the depth direction perpendicular to the surface of the bottom land 25 between two adjacent teeth 21 and therefore a position deeper than the depth of 50 µm from the surface always remains.

The content of carbon contained within the range of 50 µm deep from the surface of the inner ring raceway 2c of the bearing portion 10 having the raceway is preferably 0.75 mass% or more and 0.95 mass% or less. The content of carbon contained within the range of 50 µm deep from the surface of the bottom land 25 between two adjacent teeth 21 of the power transmission portion 20 having the teeth is preferably 0.55 mass% or more and 0.75 mass% or less.

The surface carbon content on the raceway of the bearing portion 10 having the raceway (carbon contained within the range of 50 µm deep from the surface) is considered as follows. As the rolling elements repeatedly roll on the raceway of the bearing portion 10 having the raceway, stress is repeatedly applied to the raceway 11 (2C) of the bearing portion 10 having the raceway, resulting in internally initiated flaking and surface initiated flaking in the raceway 11 (2C) of the bearing portion 10 having the raceway. It is required to extend the rolling fatigue life until internally initiated flaking or surface initiated flaking occurs. The rolling fatigue life when the surface carbon content is large is longer than the rolling fatigue life when the surface carbon content is small. For this reason, it is desirable that the surface carbon content of the raceway 11 (2C) of the bearing portion 10 having the raceway be large.

The surface carbon content on the bottom land between two adjacent teeth of the power transmission portion 20 having the teeth is considered as follows. The bending fatigue strength of the bottom land of the power transmission portion 20 having the teeth when the surface carbon content is large is lower than the bending fatigue strength of the bottom land of the power transmission portion 20 having the teeth when the surface carbon content is small. The toughness of the tooth tip when the surface carbon content is large is lower than the toughness of the tooth tip when the surface carbon content is small due to the precipitation of coarse carbides at the tooth tips of the teeth of the power transmission portion 20 having the teeth. For this reason, it is desirable that the surface carbon content of the teeth of the power transmission portion 20 having the teeth be small.

The amount of carbon contained within the range of 50 µm deep from the surface of the inner ring raceway 2c of the bearing portion 10 having the raceway is determined by cutting the bearing raceway component 2 along a plane including the central axis to pass through the inner ring raceway 2c and measuring the amount of carbon within the range of 50 µm deep from the outer circumferential surface in the obtained cut surface using an electron probe microanalyzer (EPMA). The amount of carbon contained within the range of 50 µm deep from the bottom land 25 between two adjacent teeth 21 of the power transmission portion 20 having the teeth is determined by cutting the bearing raceway component 2 along a plane perpendicular to the central axis to pass through the teeth 21 and measuring the amount of carbon within the range of 50 µm deep from the bottom land 25 between two adjacent teeth 21 of the power transmission portion 20 having the teeth in the obtained cut surface using an electron probe microanalyzer (EPMA).

Appropriate combinations of the first steel material and the second steel material, including the first to fifth combinations described above, and preferred qualities are obtained when the dimensional relationship between the raceway of the bearing portion having the raceway (that may be the inner ring raceway or the outer ring raceway instead of the inner ring raceway) and the teeth of the power transmission portion having the teeth is such that the outside diameter of the teeth is approximately 0.5 to 5 times as large as the smallest outside diameter of the inner ring raceway or the largest bore diameter of the outer ring raceway. Such combinations, qualities, and dimensional relationship ensure the balance between the performance of the raceway and the performance of the teeth.

Next, a method for manufacturing the bearing raceway component 2 will be described. The method for manufacturing the bearing raceway component 2 includes a method for manufacturing the shaft component 2'. The bearing raceway component 2 can be manufactured by, for example, a first manufacturing method or a second manufacturing method. In these manufacturing methods, the shaft component 2' is manufactured, and then the bearing raceway component 2 is manufactured by carburizing or carbonitriding the shaft component 2'.

### (First Manufacturing Method)

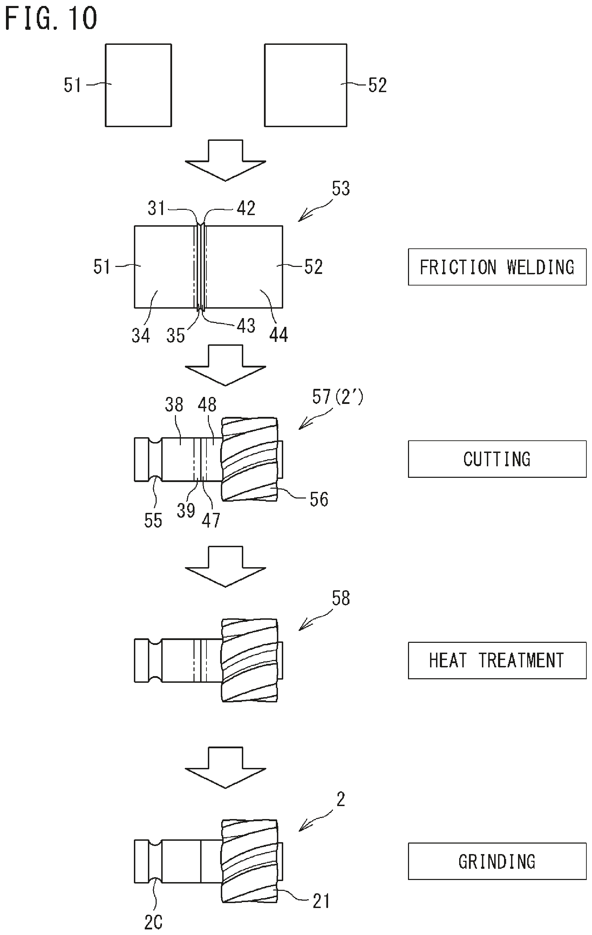

FIG. 10 is a diagram illustrating the first manufacturing method for the bearing raceway component.
(1) A cylindrical workpiece 51 made of the first steel material and a cylindrical workpiece 52 made of the second steel material are prepared. These workpieces are joined to produce a cylindrical joined workpiece (first workpiece) 53 in which the two workpieces are integrated. The first steel material and the second steel material are steel materials having different alloy compositions, and the combination thereof is as described above. The workpiece 51 and the workpiece 52 are joined by friction welding. The workpiece 51 is a workpiece prior to first machining that will serve as a bearing portion having a raceway through subsequent steps. The workpiece 52 is a workpiece prior to second machining that will serve as a power transmission portion having teeth through subsequent steps. The friction welding is performed by a known method, and the processing conditions are selected as appropriate depending on the types and sizes of the steel materials.

In the joined workpiece (first workpiece) 53 obtained by the friction welding, burrs 31 are usually generated in the vicinity of the joining surface of the workpiece 51 with the workpiece 52, and burrs 42 are usually generated in the vicinity of the joining surface of the workpiece 52 with the workpiece 51. The burrs 31, 42 are removed by the subsequent first machining and the subsequent second machining, or by cutting separate from the first machining and the second machining. The burrs 31, 42 may be left without being removed.

When the joined workpiece (first workpiece) 53 is produced, the Vickers hardness of the workpiece 51 in the vicinity of the joining surface with the workpiece 52 is greater than that of the raw material (first steel material) due to the friction welding. The workpiece 51 constituting the joined workpiece 53 includes a portion 35 that will serve as the third portion after the subsequent first machining, and a portion 34 that is located farther away from the joining surface with the workpiece 52 than the portion 35 and will serve as the fifth portion after the subsequent first machining. The Vickers hardness of the workpiece 52 in the vicinity of the joining surface with the workpiece 51 is greater than that of the raw material (second steel material) due to the friction welding. The workpiece 52 constituting the joined workpiece 53 includes a portion 43 that will serve as the fourth portion after the subsequent second machining, and a portion 44 that is located farther away from the joining surface with the workpiece 52 than the portion 43 and will serve as the sixth portion after the subsequent second machining.

(2) A portion 55 that will serve as the inner ring raceway 2c is formed on the workpiece 51 in the joined workpiece 53 in part by cutting serving as the first machining. The portion 55 that will serve as the inner ring raceway 2c is formed in the portion 34 of the workpiece 51. A portion 56 that will serve as the gear teeth 21 is formed on the workpiece 52 in the joined workpiece 53 in part by cutting serving as the second machining. The portion 56 that will serve as the gear teeth 21 is formed in the portion 44 of the workpiece 52. One of the formation of the portion 55 that will serve as the inner ring raceway and the formation of the portion 56 that will serve as the gear teeth is performed first, and the other is performed later.

This step provides a second workpiece 57 including the portion 55 that will serve as the inner ring raceway and the portion 56 that will serve as the gear teeth. The second workpiece 57 is a workpiece in which the workpiece 51 and the workpiece 52 are joined by the friction welding. The workpiece 51 subjected to the friction welding includes a third portion 39 that includes the joining surface with the workpiece 52 and has a Vickers hardness greater than that of the first steel material, and a fifth portion 38 that is located on the first axial side of the third portion 39 and includes the portion 55 that will serve as the inner ring raceway 2c. The workpiece 52 subjected to the friction welding includes a third portion 47 that includes the joining surface with the workpiece 51 and has a Vickers hardness greater than that of the second steel material, and a fifth portion 48 that is located on the second axial side of the third portion 47 and includes the portion 56 that will serve as the teeth 21. The second workpiece 57 is the shaft component 2' of the present embodiment.

(3) The second workpiece 57 is subjected to heat treatment. Specifically, the second workpiece 57 is carburized or carbonitrided, then quenched, and then tempered. The entire second workpiece 57 is subjected to heat treatment. In other words, the portion 55 that will serve as the inner ring raceway and the portion 56 that will serve as the gear teeth are simultaneously subjected to the heat treatment. The carburizing treatment is performed, for example, under the conditions of a carburizing atmosphere at a carbon potential of 0.9 to 1.4 and a temperature of 900 to 1000°C and holding for 1 to 15 hours. The carbonitriding treatment is performed, for example, under the conditions of a carbonitriding atmosphere at a carbon potential of 0.9 to 1.4, an ammonia gas flow rate of 1 to 5 mass% with respect to a carburizing gas flow rate, and a temperature of 830 to 900°C and holding for 1 to 15 hours. In the carburizing treatment and the carbonitriding treatment, the carbon potential, the ammonia gas flow rate, and the temperature may be changed during the treatment.

The quenching treatment is performed, for example, under the conditions that the workpiece subjected to the carburizing treatment or the carbonitriding treatment is held at 820 to 870°C for 0.5 to 2 hours and then subjected to oil quenching. The tempering treatment is performed, for example, under the conditions that the workpiece subjected to the quenching treatment is held at 150 to 200°C for 1 to 5 hours and then cooled in air.

This step provides a third workpiece 58 including a carburized layer or a carbonitrided layer formed on the outer circumferential surface. Since the carburized layer or the carbonitrided layer on the third workpiece 58 is formed by the method described above, the carburized layer or the carbonitrided layer formed on the workpiece 51 made of the first steel material and the carburized layer or the carbonitrided layer formed on the workpiece 52 made of the second steel material are connected to each other. Further, the inside of the workpiece 51 made of the first steel material and the inside of the workpiece 52 made of the second steel material are connected to each other. The carburized layer or the carbonitrided layer is a surface hardened layer having a hardness increased through the carburizing treatment or the carbonitriding treatment, the quenching treatment, and the tempering treatment.

(4) The third workpiece 58 is subjected to grinding as third machining and grinding as fourth machining. The third workpiece 58 is finished to obtain, with predetermined accuracies, the inner ring raceway 2c by the grinding serving as the third machining and the gear teeth 21 by the grinding serving as the fourth machining.
At this time, one of the grinding serving as the third machining on the portion that will serve as the inner ring raceway and the grinding serving as the fourth machining on the portion that will serve as the gear teeth is performed first, and the other is performed later. In the step (4), one or both of the third machining and the fourth machining may be omitted.
The bearing raceway component 2 is manufactured by performing the steps (1) to (4).

### (Second Manufacturing Method)

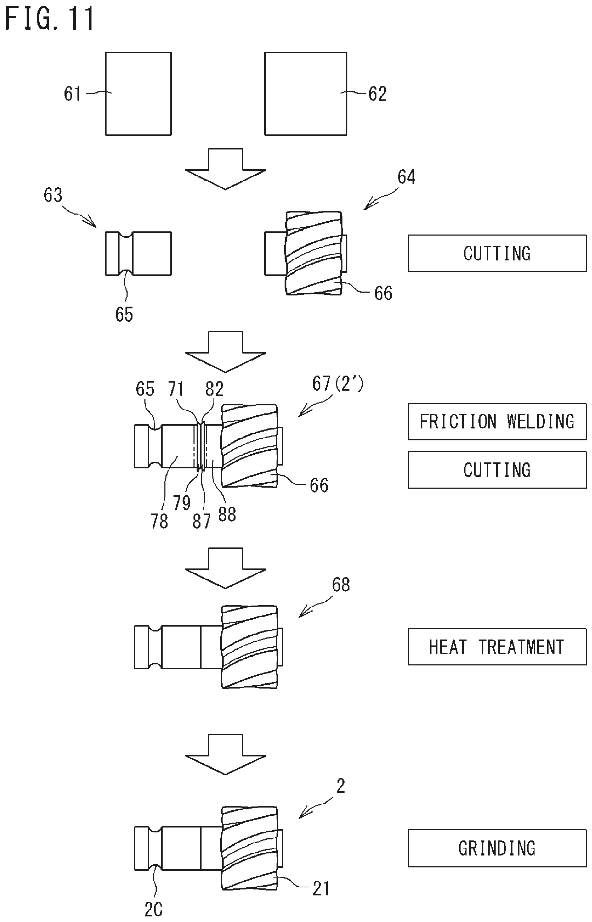

FIG. 11 is a diagram illustrating the second manufacturing method for the bearing raceway component.
(1) A cylindrical workpiece 61 made of the first steel material is prepared. A portion 65 that will serve as the inner ring raceway 2c is formed on the workpiece 61 made of the first steel material in part by cutting serving as the first machining. Thus, a workpiece 63 for the first portion that includes the portion 65 that will serve as the inner ring raceway is produced. A cylindrical workpiece 62 made of the second steel material is prepared. A portion 66 that will serve as the gear teeth 21 is formed on the workpiece 62 made of the second steel material in part by cutting serving as the second machining. Thus, a workpiece 64 for the second portion that includes the portion 66 that will serve as the gear teeth is produced.

The first steel material and the second steel material are steel materials having different alloy compositions, and the combination thereof is as described above. One of the production of the workpiece 63 for the first portion and the production of the workpiece 64 for the second portion is performed first, and the other is performed later. The workpiece 61 is an unprocessed workpiece that will serve as a bearing portion having a raceway through subsequent steps. The workpiece 63 is a workpiece that is subjected to the cutting serving as the first machining and will serve as the bearing portion having the raceway 65 through subsequent steps. The workpiece 62 is an unprocessed workpiece that will serve as a power transmission portion having teeth through subsequent steps. The workpiece 64 is a workpiece that is subjected to the cutting serving as the second machining and will serve as the power transmission portion having the teeth 66 through subsequent steps.

(2) The workpiece 63 for the first portion and the workpiece 64 for the second portion are joined to produce a cylindrical second workpiece 67 in which the two workpieces are integrated. The workpiece 63 for the first portion and the workpiece 64 for the second portion are joined by friction welding. The friction welding is performed by a known method, and the processing conditions are selected as appropriate depending on the types and sizes of the steel materials.

In the second workpiece 67 produced through the friction welding, burrs 71 are usually generated in the vicinity of the joining surface of the workpiece 63 with the workpiece 65, and burrs 82 are usually generated in the vicinity of the joining surface of the workpiece 64 with the workpiece 63. The burrs 71, 82 are removed by subjecting the second workpiece 67 to cutting after the friction welding. The burrs 71, 82 may be left without being removed.

The Vickers hardness of the workpiece 63 in the vicinity of the joining surface with the workpiece 64 is greater than that of the raw material (first steel material) due to the friction welding. The Vickers hardness of the workpiece 64 in the vicinity of the joining surface with the workpiece 63 is greater than that of the raw material (second steel material) due to the friction welding.

The second workpiece 67 obtained after this step is a workpiece in which the workpiece 63 and the workpiece 64 are joined by the friction welding. The workpiece 63 subjected to the friction welding includes a third portion 79 that includes the joining surface with the workpiece 64 and has a Vickers hardness greater than that of the first steel material, and a fifth portion 78 that is located farther away from the joining surface than the third portion 79 and includes the portion 65 that will serve as the inner ring raceway 2c. The workpiece 64 subjected to the friction welding includes a third portion 87 that includes the joining surface with the workpiece 63 and has a Vickers hardness greater than that of the second steel material, and a fifth portion 88 that is located farther away from the joining surface than the third portion 87 and includes the portion 66 that will serve as the teeth 21. The second workpiece 67 is the shaft component 2' of the present embodiment.

(3) The second workpiece 67 is subjected to heat treatment. Specifically, the second workpiece 67 is carburized or carbonitrided, then quenched, and then tempered. This step is performed by the same method as in the step (3) of the first manufacturing method. In this case, the bearing portion 65 having the raceway that will serve as the inner ring raceway and the power transmission portion 66 having the teeth that will serve as the gear teeth are simultaneously subjected to the heat treatment.

This step provides a third workpiece 68 including a carburized layer or a carbonitrided layer formed on the outer circumferential surface. Since the carburized layer or the carbonitrided layer on the third workpiece 68 is formed by the method described above, the carburized layer or the carbonitrided layer formed on the workpiece 63 made of the first steel material and the carburized layer or the carbonitrided layer formed on the workpiece 64 made of the second steel material are connected to each other. Further, the inside of the workpiece 63 made of the first steel material and the inside of the workpiece 64 made of the second steel material are connected to each other. The carburized layer or the carbonitrided layer is a surface hardened layer having a hardness increased through the carburizing treatment or the carbonitriding treatment, the quenching treatment, and the tempering treatment.

(4) The third workpiece 68 is subjected to grinding as the third machining and grinding as the fourth machining.
This step is performed by the same method as in the step (4) of the first manufacturing method. In the step (4), one or both of the third machining and the fourth machining may be omitted.
The bearing raceway component 2 is manufactured also by the second manufacturing method that involves the steps (1) to (4).

### (Second Embodiment)

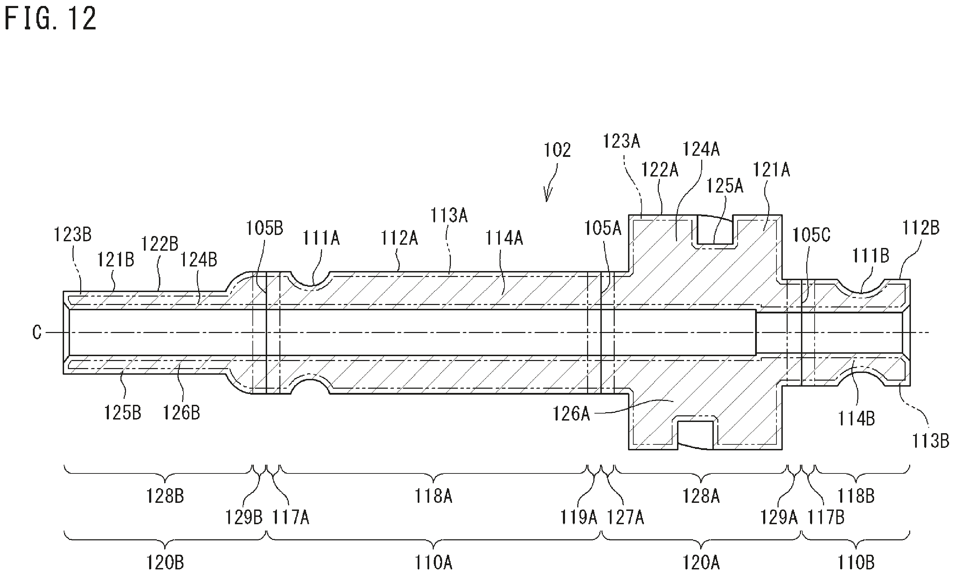

The bearing raceway component according to the embodiment of the present disclosure may include two or more bearing portions each having a raceway and one or more power transmission portions each having teeth, or may include one or more bearing portions each having a raceway and two or more power transmission portions each having teeth. FIG. 12 is a sectional view of a bearing raceway component according to a second embodiment. As shown in FIG. 12, a bearing raceway component 102 according to the present embodiment is a cylindrical shaft member. The bearing raceway component 102 includes two bearing portions 110A, 110B each having a raceway, and two power transmission portions 120A, 120B each having teeth.

As shown in FIG. 12, the bearing raceway component 102 includes, along the axial direction, the power transmission portion 120B having the teeth, the bearing portion 110A having the raceway, the power transmission portion 120A having the teeth, and the bearing portion 110B having the raceway. The power transmission portion 120B having the teeth and the bearing portion 110A having the raceway are joined at a joining surface 105B by friction welding. The bearing portion 110A having the raceway and the power transmission portion 120A having the teeth are joined at a joining surface 105A by friction welding. The power transmission portion 120A having the teeth and the bearing portion 110B having the raceway are joined at a joining surface 105C by friction welding. The bearing raceway component 102 is a four-part integrated member.

The configuration of the bearing portion 110A having the raceway is the same as that of the bearing portion 10 having the raceway in the first embodiment. The bearing portion 110A having a raceway 111A is combined with the outer ring 3, the cage 8, and a plurality of balls to form a ball bearing that is a rolling bearing. The configuration of the power transmission portion 120A having the teeth is the same as that of the power transmission portion 20 having the teeth in the first embodiment. The power transmission portion 120A having the teeth includes external gear teeth 121A on part of the outer circumferential surface as the power transmission portion 120A having the teeth. The power transmission portion 120A having the teeth 121A includes a bottom land 125A between two adjacent teeth 121A. A portion of the power transmission portion 120A having the teeth with a diameter equal to or smaller than the root diameter is a root cylinder portion 126A, and a portion of the power transmission portion 120A having the teeth with a diameter larger than the root diameter is the teeth 121A. The teeth 121A are helical gear teeth. The teeth 121A mesh with teeth of another gear to transmit power to an element other than the bearing raceway component 102. A first surface hardened layer 113A of the bearing portion 110A having the raceway is connected to a second surface hardened layer 123A of the power transmission portion 120A having the teeth. A first inner portion 114A of the bearing portion 110A having the raceway is connected to a second inner portion 124A of the power transmission portion 120A having the teeth.

The bearing portion 110B having the raceway includes a raceway groove 111B serving as an inner ring raceway on part of its outer circumference. The bearing portion 110B having the raceway is combined with an outer ring, a cage, and a plurality of balls to form a ball bearing that is a rolling bearing. The raw material of the bearing portion 110B having the raceway is the first steel material described above. The raw material of the bearing portion 110B having the raceway may be the same as or different from the raw material of the bearing portion 110A having the raceway.

The bearing portion 110B having the raceway includes a first surface hardened layer 113B and a first inner portion 114B similarly to the bearing portion 10 having the raceway. The first surface hardened layer 113B is provided along the surface including an outer circumferential surface 112B of the bearing portion 110B having the raceway. The first inner portion 114B is provided opposite to the surface including the outer circumferential surface 112B of the bearing portion 110B having the raceway with respect to the first surface hardened layer 113B. The average hardness of the first surface hardened layer 113B is greater than the average hardness of the first inner portion 114B. The first surface hardened layer 113B is a carburized layer or a carbonitrided layer. The first surface hardened layer 113B is connected to the second surface hardened layer 123A of the adjacent power transmission portion 120A having the teeth. The first inner portion 114B of the bearing portion 110B having the raceway is connected to the second inner portion 124A of the power transmission portion 120A having the teeth. The configuration of the bearing portion 110B having the raceway is preferably the same as that of the bearing portion 10 having the raceway.

The power transmission portion 120B having the teeth serves to transmit power between the bearing raceway component 102 and an element other than the bearing raceway component 102. The power transmission portion 120B having the teeth includes spline teeth 121B on part of its outer circumference. The spline teeth 121B are connected to, for example, a motor shaft to transmit power to and from the motor. The raw material of the power transmission portion 120B having the teeth is the second steel material described above. The raw material of the power transmission portion 120B having the teeth may be the same as or different from the raw material of the power transmission portion 120A. The power transmission portion 120B having the teeth 121B includes a bottom land 125B between two adjacent teeth 121B. A portion of the power transmission portion 120B having the teeth with a diameter equal to or smaller than the root diameter is a root cylinder portion 126B, and a portion of the power transmission portion 120B having the teeth with a diameter larger than the root diameter is the teeth 121B.

The power transmission portion 120B having the teeth includes a second surface hardened layer 123B and a second inner portion 124B similarly to the power transmission portion 20 having the teeth. The second surface hardened layer 123B is provided along the surface including an outer circumferential surface 122B of the power transmission portion 120B. The second inner portion 124B is provided opposite to the surface including the outer circumferential surface 122B of the power transmission portion 120B having the teeth with respect to the second surface hardened layer 123B. The average hardness of the second surface hardened layer 123B is greater than the average hardness of the second inner portion 124B. The second surface hardened layer 123B is a carburized layer or a carbonitrided layer. The second surface hardened layer 123B is connected to the first surface hardened layer 113A of the adjacent bearing portion 110A having the raceway. The second inner portion 124B of the power transmission portion 120B having the teeth is connected to the first inner portion 114A of the bearing portion 110A having the raceway. The configuration of the power transmission portion 120B having the teeth is preferably the same as that of the power transmission portion 20 having the teeth.

In the bearing raceway component 102, all of the outer circumferential surfaces 112A, 112B, 122A, 122B of the cylindrical shaft member are formed by the surface hardened layers 113A, 113B, 123A, 123B. Both end faces and the inner circumferential surface of the bearing raceway component 102 are also formed by surface hardened layers. The surface hardened layer 123B and the surface hardened layer 113A, the surface hardened layer 113A and the surface hardened layer 123A, and the surface hardened layer 123A and the surface hardened layer 113B are all connected to each other. All of the surface hardened layers 113A, 113B, 123A, and 123B are carburized layers or carbonitrided layers. The inner portion 124B and the inner portion 114A, the inner portion 114A and the inner portion 124A, and the inner portion 124A and the inner portion 114B are all connected to each other.

In the bearing raceway component 102, the preferred combination of the raw materials of the bearing portions each having the raceway and the power transmission portions each having the teeth is the same combination as a combination that satisfies the condition that the combination of the raw materials of the bearing portion having the raceway and the power transmission portion having the teeth that adjoin each other is at least one of the first to fourth combinations described in the first embodiment. Therefore, the preferred bearing raceway component 102 satisfies the condition that each of the combination of the bearing portion 110A having the raceway and the power transmission portion 120A having the teeth, the combination of the bearing portion 110A having the raceway and the power transmission portion 120B having the teeth, and the combination of the bearing portion 110B having the raceway and the power transmission portion 120A having the teeth is at least one of the first to fourth combinations independently.

In the bearing raceway component 102, all of the raceways are located at positions axially spaced from the joining surfaces by 5 mm or more, and all of the teeth are located at positions axially spaced from the joining surfaces by 5 mm or more. In the bearing raceway component 102, the bearing portions each having the raceway and the power transmission portions each having the teeth have a preferred relationship in terms of the range with a hardness of 700 HV or more, the relationship between the alloy composition of the first steel material and the alloy composition of the second steel material, and the content of carbon contained in the range of 50 µm deep from the outer circumferential surface. The preferred relationship between the bearing portions each having the raceway and the power transmission portions each having the teeth may be any relationship that is present between the bearing portion having the raceway and the power transmission portion having the teeth that adjoin each other.

The bearing raceway component 102 can be manufactured in the same manner as in the first embodiment, except for the number of workpieces to be joined by friction welding. That is, a workpiece made of a steel material for manufacture of the bearing portion 110A having the raceway, a workpiece made of a steel material for manufacture of the bearing portion 110B having the raceway, a workpiece made of a steel material for manufacture of the power transmission portion 120A having the teeth, and a workpiece made of a steel material for manufacture of the power transmission portion 120B having the teeth are prepared, and cutting of the workpieces and friction welding for joining the workpieces are performed under predetermined conditions to manufacture a shaft component. The shaft component is carburized or carbonitrided to manufacture the bearing raceway component.

In FIG. 12, reference signs 117A, 119A denote portions having hardnesses equal to or greater than the reference hardness by the friction welding in the workpiece for manufacture of the bearing portion 110A having the raceway, and reference sign 118A denotes the remaining portion of this workpiece. In FIG. 12, reference sign 117B denotes a portion having a hardness equal to or greater than the reference hardness by the friction welding in the workpiece for manufacture of the bearing portion 110B having the raceway, and reference sign 118B denotes the remaining portion of this workpiece. In FIG. 12, reference signs 127A, 129A denote portions having hardnesses equal to or greater than the reference hardness by the friction welding in the workpiece for manufacture of the power transmission portion 120A having the teeth, and reference sign 128A denotes the remaining portion of this workpiece. In FIG. 12, reference sign 129B denotes a portion having a hardness equal to or greater than the reference hardness by the friction welding in the workpiece for manufacture of the power transmission portion 120B having the teeth, and reference sign 128B denotes the remaining portion of this workpiece.

In the bearing raceway component 102 according to the present embodiment, all of the raceways 111A, 111B, the external gear teeth 121A, and the spline teeth 121B are located so as not to overlap the portions having hardnesses equal to or greater than the reference hardness by the friction welding.

### (Third Embodiment)

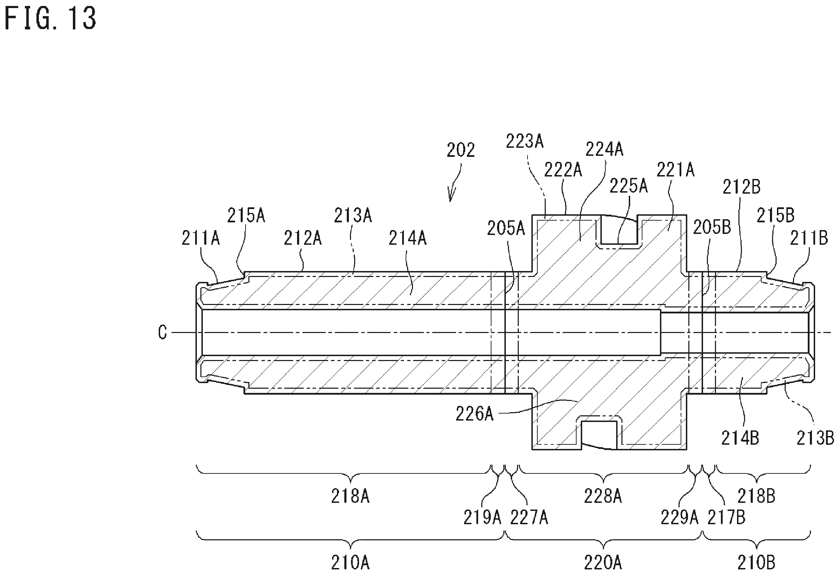

FIG. 13 is a sectional view of a bearing raceway component according to a third embodiment. As shown in FIG. 13, a bearing raceway component 202 according to the present embodiment is a cylindrical shaft member. The bearing raceway component 202 includes two bearing portions 210A, 210B each having a raceway, and one power transmission portion 220A having teeth.

As shown in FIG. 13, the bearing raceway component 202 includes, along the axial direction, the bearing portion 210A having the raceway, the power transmission portion 220A having the teeth, and the bearing portion 210B having the raceway. The bearing portion 210A having the raceway and the power transmission portion 220A having the teeth are joined at a joining surface 205A by friction welding. The power transmission portion 220A having the teeth and the bearing portion 210B having the raceway are joined at a joining surface 205B by friction welding. The bearing raceway component 202 is a three-part integrated member.

The configuration of the bearing portion 210A having the raceway is the same as that of the bearing portion 10 having the raceway in the first embodiment, except that the raceway is a conical raceway 211A and has a rib 215A axially adjacent to the raceway 211A. The bearing portion 210A having the raceway is combined with the outer ring 3, the cage 8, and a plurality of rollers to form a roller bearing (tapered roller bearing) that is a rolling bearing. The configuration of the power transmission portion 220A having the teeth is the same as that of the power transmission portion 20 having the teeth in the first embodiment. The power transmission portion 220A having the teeth includes external gear teeth 221A on part of the outer circumferential surface as the power transmission portion 220A having the teeth. The power transmission portion 220A having the teeth 221A includes a bottom land 225A between two adjacent teeth 221A. A portion of the power transmission portion 220A having the teeth with a diameter equal to or smaller than the root diameter is a root cylinder portion 226A, and a portion of the power transmission portion 220A having the teeth with a diameter larger than the root diameter is the teeth 221A. The teeth 221A are helical gear teeth. The teeth 221A mesh with teeth of another gear to transmit power to an element other than the bearing raceway component 202. A first surface hardened layer 213A of the bearing portion 210A having the raceway is connected to a second surface hardened layer 223A of the power transmission portion 220A having the teeth. A first inner portion 214A of the bearing portion 210A having the raceway is connected to a second inner portion 224A of the power transmission portion 220A having the teeth.

The bearing portion 210B having the raceway includes a conical raceway 211B on part of its outer circumference and a rib 215B axially adjacent to the raceway 211B. The bearing portion 210B having the raceway is combined with an outer ring, a cage, and a plurality of rollers to form a roller bearing (tapered roller bearing) that is a rolling bearing. The tapered roller bearing constituted by the bearing portion 210A having the raceway and the tapered roller bearing constituted by the bearing portion 210B having the raceway are arranged face-to-face. The raw material of the bearing portion 210B having the raceway is the first steel material described above. The raw material of the bearing portion 210B having the raceway may be the same as or different from the raw material of the bearing portion 210A having the raceway.

The bearing portion 210B having the raceway includes a first surface hardened layer 213B and a first inner portion 214B similarly to the bearing portion 10 having the raceway. The first surface hardened layer 213B is provided along the surface including an outer circumferential surface 212B of the bearing portion 210B having the raceway. The first inner portion 214B is provided opposite to the surface including the outer circumferential surface 212B of the bearing portion 210B having the raceway with respect to the first surface hardened layer 213B. The average hardness of the first surface hardened layer 213B is greater than the average hardness of the first inner portion 214B. The first surface hardened layer 213B is a carburized layer or a carbonitrided layer. The first surface hardened layer 213B is connected to the second surface hardened layer 223A of the adjacent power transmission portion 220A having the teeth. The first inner portion 214B of the bearing portion 210B having the raceway is connected to the second inner portion 224A of the power transmission portion 220A having the teeth. The configuration of the bearing portion 210B having the raceway is preferably the same as that of the bearing portion 10 having the raceway.

In the bearing raceway component 202, all of the outer circumferential surfaces 212A, 212B, 222A of the cylindrical shaft member are formed by the surface hardened layers 213A, 213B, 223A. Both end faces and the inner circumferential surface of the bearing raceway component 202 are also formed by surface hardened layers. The surface hardened layer 213A and the surface hardened layer 223A, and the surface hardened layer 223A and the surface hardened layer 213B are all connected to each other. All of the surface hardened layers 213A, 213B, and 223A are carburized layers or carbonitrided layers. The inner portion 214A and the inner portion 224A, and the inner portion 224A and the inner portion 214B are all connected to each other.

In the bearing raceway component 202, the preferred combination of the raw materials of the bearing portions each having the raceway and the power transmission portion having the teeth is the same combination as a combination that satisfies the condition that the combination of the raw materials of the bearing portion having the raceway and the power transmission portion having the teeth that adjoin each other is at least one of the first to fourth combinations described in the first embodiment. Therefore, the preferred bearing raceway component 202 satisfies the condition that each of the combination of the bearing portion 210A having the raceway and the power transmission portion 220A having the teeth and the combination of the bearing portion 210B having the raceway and the power transmission portion 220A having the teeth is at least one of the first to fourth combinations independently.

In the bearing raceway component 202, all of the raceways are located at positions axially spaced from the joining surfaces by 5 mm or more, and all of the teeth are located at positions axially spaced from the joining surfaces by 5 mm or more. In the bearing raceway component 202, the bearing portions each having the raceway and the power transmission portion having the teeth have a preferred relationship in terms of the range with a hardness of 700 HV or more, the relationship between the alloy composition of the first steel material and the alloy composition of the second steel material, and the content of carbon contained in the range of 50 µm deep from the outer circumferential surface. The preferred relationship between the bearing portions each having the raceway and the power transmission portion having the teeth may be any relationship that is present between the bearing portion having the raceway and the power transmission portion having the teeth that adjoin each other.

The bearing raceway component 202 can be manufactured in the same manner as in the first embodiment, except for the number of workpieces to be joined by friction welding. That is, a shaft component is manufactured through friction welding, and the shaft component is carburized or carbonitrided to manufacture the bearing raceway component. That is, a workpiece made of a steel material for manufacture of the bearing portion 210A having the raceway, a workpiece made of a steel material for manufacture of the bearing portion 210B having the raceway, and a workpiece made of a steel material for manufacture of the power transmission portion 220A having the teeth are prepared, and cutting of the workpieces and friction welding for joining the workpieces are performed under predetermined conditions to manufacture a shaft component. The shaft component is carburized or carbonitrided to manufacture the bearing raceway component.

In FIG. 13, reference sign 219A denotes a portion having a hardness equal to or greater than the reference hardness by the friction welding in the workpiece for manufacture of the bearing portion 210A having the raceway, and reference sign 218A denotes the remaining portion of this workpiece. In FIG. 13, reference sign 217B denotes a portion having a hardness equal to or greater than the reference hardness by the friction welding in the workpiece for manufacture of the bearing portion 210B having the raceway, and reference sign 218B denotes the remaining portion of this workpiece. In FIG. 13, reference signs 227A, 229A denote portions having hardnesses equal to or greater than the reference hardness by the friction welding in the workpiece for manufacture of the power transmission portion 220A having the teeth, and reference sign 228A denotes the remaining portion of this workpiece.

In the bearing raceway component 202 according to the present embodiment, all of the conical raceway 211A, the conical raceway 211B, and the external gear teeth 221A are located so as not to overlap the portions having hardnesses equal to or greater than the reference hardness by the friction welding.

### (Other Embodiments)

The bearing raceway component 2 according to the first embodiment is the cylindrical shaft member. The bearing raceway component according to the embodiment of the present disclosure may be a columnar shaft member that does not have the hole of the bearing raceway component 2 according to the first embodiment. In this case, the bearing raceway component is manufactured through steps of preparing a columnar workpiece made of the first steel material and a columnar workpiece made of the second steel material and subjecting these workpieces to friction welding. Alternatively, the bearing raceway component according to the embodiment of the present disclosure may be manufactured through steps of preparing a columnar workpiece made of the first steel material and a cylindrical workpiece made of the second steel material and subjecting these workpieces to friction welding. Alternatively, the bearing raceway component according to the embodiment of the present disclosure may be manufactured through steps of preparing a cylindrical workpiece made of the first steel material and a columnar workpiece made of the second steel material and subjecting these workpieces to friction welding.

The bearing raceway component according to the embodiment of the present disclosure may be a hollow shaft member having a sealed hollow, in which the hole of the bearing raceway component 2 according to the first embodiment is sealed at a position on the first axial side of the joining surface 5 and at a position on the second axial side of the joining surface 5.

The bearing raceway component according to the embodiment of the present disclosure may include gear teeth, spline teeth, teeth of a toothed pulley, or the like as the teeth of the power transmission portion having the teeth.

In the bearing raceway component according to the embodiment of the present disclosure, the number of the bearing portions each having the raceway and the power transmission portions each having the teeth is not limited as long as the bearing portions each having the raceway and the power transmission portions each having the teeth are joined together. There may be a total of three portions including one bearing portion having the raceway and two power transmission portions each having the teeth. There may be a total of five or more portions. When the total number is too large, however, the central axis of each bearing portion and the central axis of each power transmission portion may be misaligned, and distortion may easily occur in the bearing raceway component. Therefore, the total number is preferably four or less.

In the bearing raceway component according to the embodiment of the present disclosure, the bearing portion having the raceway may have a plurality of raceways. In the bearing raceway component according to the embodiment of the present disclosure, the bearing portion having the raceway is not limited to the bearing portion having the inner ring raceway, but may be a bearing portion having an outer ring raceway. The raceway may be provided on the inner circumferential surface. In the bearing raceway component according to the embodiment of the present disclosure, the bearing portion having the raceway may be one of a shaft washer and a housing washer. The raceway may be provided on the end face.

In the bearing raceway component according to the embodiment of the present disclosure, the power transmission portion having the teeth may have a plurality of types of teeth as the teeth constituting the power transmission portion. In the bearing raceway component according to the embodiment of the present disclosure, the power transmission portion having the teeth is not limited to the power transmission portion having the external gear, but may be a power transmission portion having an internal gear, or a power transmission portion having a bevel gear, a hypoid gear, or a face spline. The gear may be provided on the inner circumferential surface or the end face.

The application of the bearing raceway component according to the embodiment of the present disclosure is not particularly limited, and it can be used in a variety of applications. Specifically, the bearing raceway component can be used in, for example, a drive reducer for an automobile.

### Description of the Reference Numerals

1: bearing device
2, 102, 202: bearing raceway component
2': shaft component
2c: inner ring raceway
3: outer ring
3c: outer ring raceway
4: ball
5, 5', 105A, 105B, 105C, 205A, 205B: joining surface
6: bearing
7: tooth
8: cage
10, 110A, 110B, 210A, 210B: bearing portion having raceway
11, 111A, 111B, 211A, 211B: raceway groove
12, 22, 112A, 112B, 122A, 122B, 211A, 211B, 222A: outer circumferential surface
13, 23, 113A, 113B, 123A, 123B, 213A, 213B, 221A: surface hardened layer
14, 24, 114A, 114B, 124A, 124B, 214A, 214B, 221A: inner portion
20, 120A, 120B, 220A, 220B: power transmission portion having teeth
21, 121A, 121B, 221A: tooth
25, 125A, 125B, 225A: bottom land
26, 126A, 126B, 226A: root cylinder portion
51, 52, 57, 58, 61, 62, 63, 64, 67, 68: workpiece
53: joined workpiece
55, 65: portion serving as inner ring raceway
56, 66: portion serving as gear teeth

## Claims

1. A shaft component for manufacture of a bearing raceway component including a power transmission portion having teeth by carburizing or carbonitriding, the shaft component comprising a columnar or cylindrical shaft member, wherein
the shaft member has a central axis,
the shaft member includes a first portion on a first axial side, and a second portion on a second axial side of the first portion,
the first portion is integrated with the second portion,
the first portion is made of a first steel material as a raw material,
the second portion is made of a second steel material as a raw material,
the first portion includes a portion serving as a raceway,
the second portion includes a portion serving as the teeth,
an alloy composition of the first steel material is different from an alloy composition of the second steel material,
a third portion includes a joining surface connected to the second portion on the second axial side of the first portion,
a fourth portion includes a joining surface connected to the first portion on the first axial side of the second portion,
a fifth portion is located in the first portion on the first axial side of the third portion,
a sixth portion is located in the second portion on the second axial side of the fourth portion,
a hardness of the third portion is greater than a hardness of the fifth portion,
a hardness of the fourth portion is greater than a hardness of the sixth portion, and
the portion serving as the raceway is located in the fifth portion and is not located in the third portion.

2. The shaft component according to claim 1, wherein the portion serving as the teeth is located in the sixth portion and is not located in the fourth portion.

3. The shaft component according to claim 1 or 2, wherein the portion serving as the raceway is a portion serving as a raceway groove along which balls roll.

4. The shaft component according to claim 1 or 2, wherein the portion serving as the raceway is a portion serving as a conical or cylindrical raceway along which rollers roll, and the shaft component further includes a portion serving as a rib axially adjacent to the portion serving as the raceway.

5. The shaft component according to claim 1 or 2, wherein the portion serving as the teeth is a portion serving as gear teeth, spline teeth, or teeth of a toothed pulley.

6. The shaft component according to claim 1 or 2, wherein:
the shaft component includes a columnar or cylindrical shaft member;
a central axis of the first portion coincides with a central axis of the second portion; and
an outer circumferential surface of a portion of the fifth portion on the second axial side, an outer circumferential surface of the third portion, an outer circumferential surface of the fourth portion, and an outer circumferential surface of a portion of the sixth portion on the first axial side define a single cylindrical surface.

7. The shaft component according to claim 1 or 2, wherein:
the shaft component includes a cylindrical shaft member;
a central axis of the first portion coincides with a central axis of the second portion; and
an inner circumferential surface of a portion of the fifth portion on the second axial side, an inner circumferential surface of the third portion, an inner circumferential surface of the fourth portion, and an inner circumferential surface of a portion of the sixth portion on the first axial side define a single cylindrical surface.

8. The shaft component according to claim 1 or 2, wherein:
a first combination of the first steel material and the second steel material is a combination in which
the first steel material contains at least one of manganese, nickel, chromium, and molybdenum as an alloy component,
the second steel material contains at least one of manganese, nickel, chromium, and molybdenum as an alloy component, and
a total content (mass%) of the manganese, the nickel, the chromium, and the molybdenum of the first steel material is more than 1.5 times as large as a total content (mass%) of the manganese, the nickel, the chromium, and the molybdenum of the second steel material;
a second combination of the first steel material and the second steel material is a combination in which
the first steel material contains silicon as an alloy component,
the second steel material contains silicon as an alloy component, and
a content (mass%) of the silicon of the first steel material is less than a content (mass%) of the silicon of the second steel material;
a third combination of the first steel material and the second steel material is a combination in which
the first steel material does not contain chromium as an alloy component or contains the chromium in an amount of 1.6 mass% or less, and does not contain niobium as the alloy component or contains the niobium in an amount of 0.01 mass% or less, and
the second steel material contains, as alloy components, chromium in an amount of 1.0 mass% or more and 2.5 mass% or less, and niobium in an amount of 0.02 mass% or more and 0.10 mass% or less;
a fourth combination of the first steel material and the second steel material is a combination in which
the first steel material contains nitrogen as an alloy component in an amount of 0.001 mass% or more and 0.050 mass% or less, does not contain boron as the alloy component or contains the boron in an amount of 0.001 mass% or less, and does not contain titanium as the alloy component or contains the titanium in an amount of 0.003 mass% or less, and
the second steel material contains, as alloy components, nitrogen in an amount of 0.001 mass% or more and 0.050 mass% or less, boron in an amount of 0.001 mass% or more and 0.005 mass% or less, and titanium in an amount of 0.01 mass% or more and 0.08 mass% or less; and
a combination of the first steel material and the second steel material satisfies at least one of the first combination, the second combination, the third combination, and the fourth combination.

9. The shaft component according to claim 1 or 2, wherein:
the first steel material contains carbon as an alloy component;
the second steel material contains carbon as an alloy component; and
a content (mass%) of the carbon of the first steel material is more than a content (mass%) of the carbon of the second steel material.

10. A method for manufacturing the shaft component according to claim 1 or 2, the method comprising:
performing friction welding on a workpiece for the first portion in a first state and a workpiece for the second portion in the first state to obtain an integrated first workpiece; and
first performing one of formation of a portion serving as a bearing portion having the raceway by first machining in the first portion of the first workpiece and formation of a portion serving as the power transmission portion having the teeth by second machining in the second portion of the first workpiece, and then performing the other.

11. A method for manufacturing the shaft component according to claim 1 or 2, the method comprising:
first performing one of formation of a portion serving as a bearing portion having the raceway by first machining in a workpiece for the first portion in a first state and formation of a portion serving as the power transmission portion having the teeth by second machining in a workpiece for the second portion in the first state, and then performing the other to obtain the workpiece for the first portion in a second state and the workpiece for the second portion in the second state; and
integrating, by friction welding, the workpiece for the first portion in the second state and the workpiece for the second portion in the second state.

12. A method for manufacturing a bearing raceway component including a power transmission portion having teeth, the method including the method for manufacturing the shaft component according to claim 10 or 11, the shaft component obtained by the manufacturing method according to claim 10 or 11 being defined as a second workpiece, the method comprising:
performing carburizing or carbonitriding, then quenching, and then tempering simultaneously on the portion serving as the bearing portion having the raceway and the portion serving as the power transmission portion having the teeth in the second workpiece; and
forming an integrated carburized layer or an integrated carbonitrided layer over an outer circumferential surface of a portion of the fifth portion on the second axial side, an outer circumferential surface of the third portion, an outer circumferential surface of the fourth portion, and an outer circumferential surface of a portion of the sixth portion on the first axial side, and/or forming an integrated carburized layer or an integrated carbonitrided layer over an inner circumferential surface of the portion of the fifth portion on the second axial side, an inner circumferential surface of the third portion, an inner circumferential surface of the fourth portion, and an inner circumferential surface of the portion of the sixth portion on the first axial side.

13. The method for manufacturing the bearing raceway component according to claim 12, wherein:
the workpiece subjected to the tempering is defined as a third workpiece; and
the method includes first performing one of third machining on the portion serving as the bearing portion having the raceway in the third workpiece and fourth machining on the portion serving as the power transmission portion having the teeth in the third workpiece, and then performing the other.

14. A bearing raceway component including a power transmission portion having teeth, the bearing raceway component being made of a columnar or cylindrical shaft member, the bearing raceway component having a central axis, the bearing raceway component comprising a seventh portion on a first axial side, and an eighth portion on a second axial side of the seventh portion, wherein
the seventh portion is integrated with the eighth portion,
the seventh portion is made of a first steel material as a raw material,
the eighth portion is made of a second steel material as a raw material,
an alloy composition of the first steel material is different from an alloy composition of the second steel material,
the seventh portion includes a raceway,
the eighth portion includes the teeth,
a carburized layer or a carbonitrided layer is provided integrally over surfaces of the seventh portion and the eighth portion,
the seventh portion includes a joining surface connected to the eighth portion on the second axial side of the seventh portion,
an entirety of the raceway is located in the seventh portion,
an entirety of the teeth is located in the eighth portion, and
the entirety of the raceway is located at a position axially spaced from the joining surface by 5 mm or more.

15. The bearing raceway component according to claim 14, wherein:
the eighth portion includes a joining surface connected to the seventh portion on the first axial side of the eighth portion; and
the entirety of the teeth is located at a position axially spaced from the joining surface by 5 mm or more.
